# FASCICULE DE BREVET EUROPEEN

(11) **EP 3 842 962 B1**
(45) Date de publication et mention de la délivrance du brevet: **12.06.2024**
(21) Numéro de dépôt: 20217381.1
(22) Date de dépôt: 28.12.2020
(51) Int. Cl.: G06F 16/953

(54) **PROCEDE ET SYSTEME DE GESTION DES FLUX DE DONNEES POUR LA GOUVERNANCE UNIFIEE D'UNE PLURALITE DE SOLUTIONS DE CALCULS INTENSIFS**
VERFAHREN UND SYSTEM ZUR VERWALTDER DATENSTRÖME FÜR DIE GEMEINSAME VERWALTUNG EINER VIELZAHL VON SUPERCOMPUTING-LÖSUNGEN
METHOD AND SYSTEM FOR MANAGING DATA STREAMS FOR UNIFIED GOVERNANCE OF A PLURALITY OF INTENSIVE CALCULATION SOLUTIONS

(30) Priorité: 27.12.2019 FR 1915664
(43) Date de publication de la demande: 30.06.2021
(73) Titulaire: BULL SAS, 78340 Les Clayes-sous-Bois (FR)
(72) Inventeur: CALEGARI, Patrice, 91790 Boissy-sous-Saint-Yon (FR); LEVRIER, Marc, 91410 Saint-Cyr-Sous-Dourdan (FR)
(74) Mandataire: Argyma

(56) Documents cités:
- EP-A1- 3 109 759
- EP-A2- 2 254 310
- WO-A1-2013/158707
- US-A1- 2018 039 565
- US-A1- 2019 325 302

## Description

L'invention s'intéresse au domaine des calculs hautes performances, et plus particulièrement à l'interfaçage à une même plateforme de plusieurs solutions de calculs intensifs présentant différentes logiques métier. L'invention concerne notamment un procédé de gestion des flux de données pour une gouvernance unifiée dans le cadre d'une plateforme centralisant l'accès à une pluralité de solutions de calculs intensifs. En outre, l'invention concerne un système informatique de gestion des flux de données pour la gouvernance unifiée capable de gérer les flux de données accessibles au niveau d'une interface agrégée d'un client utilisateur ou transmises depuis cette interface agrégée dans le cadre d'une plateforme centralisant l'accès à une pluralité de solutions de calculs intensifs.

### [Art antérieur]

Le calcul haute performance, aussi appelé HPC (« High Performance Computing » en terminologie anglo-saxonne) se développe pour la recherche universitaire comme pour l'industrie, notamment dans des domaines techniques tels que l'aéronautique, l'énergie, la climatologie et les sciences de la vie. Ces calculs sont généralement mis en oeuvre par des clusters. L'objectif de ces clusters est de dépasser les limites du matériel existant en mutualisant des ressources pour permettre l'exécution parallélisée d'instructions et l'agrégation de capacité mémoire et de disque. Un cluster, est un ensemble de moyens de calcul (aussi appelés noeuds ou serveurs) interconnectés par un réseau d'interconnexion pouvant réaliser des opérations communes. Le calcul à haute performance (HPC) est adopté par de plus en plus de scientifiques pour les aider à résoudre leurs problèmes complexes. En particulier, avec une augmentation entre 2017 et 2018 de plus de 50% de la puissance de l'ordinateur le plus puissant au monde, la puissance de calcul des supercalculateurs augmente sans cesse. De plus, il existe un nombre croissant de centres de calcul (locaux, régionaux, nationaux et internationaux) dotés de systèmes de classe pétaflopique. Etant donné qu'il n'est pas possible pour tous les utilisateurs d'investir dans les architectures informatiques capables de déployer de tels puissances de calcul, certains se sont spécialisés dans la fourniture d'accès à ces solutions de calcul haute performance.

Ainsi, ces dernières années ont vu l'apparition de plateformes d'accès à des solutions de calculs intensifs (EP3109759). En particulier, de nombreux portails HPC ont été développés. Les portails internet sont une voie commune pour accéder à l'information et aux services disponibles sur les réseaux informatiques. Les portails offrent souvent un point d'accès unique aux données et aux applications. En outre, un portail peut présenter une vue unifiée et personnalisée d'informations aux utilisateurs.

De nombreux projets HPC développent leur propre portail Web spécifique à une communauté et certains fournisseurs de cloud HPC ont développé des portails Web pour leur propre usage. Les relations entre le portail et ces systèmes d'information et de stockage sont essentielles mais complexes à mettre en oeuvre de manière sécurisée et efficace. Les données traitées dans des environnements HPC peuvent être très confidentielles (en particulier pour les industries ou les organismes financiers). Les portails HPC doivent gérer ces contraintes dans la manière dont ils exécutent les services sur le serveur principal (via l'emprunt d'identité, c'est-à-dire qu'ils exécutent le service « en tant que » utilisateur authentifié), ainsi que dans la manière dont ils affichent ou filtrent les informations dans le portail HPC.

De plus, au-delà de la puissance de calcul et du calcul haute performance, les scientifiques utilisateurs souhaitent pouvoir accéder à des solutions de calculs intensifs tels que des machines quantiques, de la simulation quantique, des plateformes de « Deep Learning » ou plus largement dédiées au développement de solutions d'intelligence artificielle.

Néanmoins, chacune de ces solutions est hébergée ou rendue accessible par des sociétés dédiées à l'une ou l'autre de ces technologies et l'utilisation notamment simultanée de ces différentes solutions de calculs intensifs devient laborieuse.

En outre, l'interaction avec chacune de ces solutions de calculs intensifs est souvent rendue laborieuse par l'hétérogénéité des protocoles de communication avec ces solutions de calcul et l'impossibilité de centraliser l'information en temps réel provenant de ces différentes solutions.

Ainsi, avec la multiplication des typologies de solutions de calculs intensifs et la complémentarité de certaines de ces solutions, il apparait nécessaire de pouvoir disposer d'une plateforme permettant d'accéder indifféremment à différentes solutions de calculs intensifs et cela de manière sécurisée, homogénéisée et transparente avec une gestion des flux d'informations telles que les données d'exécution de ces solutions de calculs intensifs.

### [Problème technique]

L'invention a donc pour but de remédier aux inconvénients de l'art antérieur. En particulier, l'invention a pour but de proposer un procédé de gestion des flux de données accessibles au niveau d'une interface agrégée d'un client utilisateur, notamment dans le cadre d'une gouvernance unifiée d'une pluralité de solutions de calculs intensifs, ledit procédé permettant de transmettre à l'interface agrégé des données actualisées des données d'exécution d'une pluralité de solutions de calculs intensifs. L'invention a en outre pour but de proposer un système informatique de gestion des flux de données accessibles au niveau d'une interface agrégée d'un client utilisateur. Un tel système informatique permet de masquer la complexité des flux de données échangées avec les solutions de calculs intensifs, de rendre possible la gestion de workflow complexes et multidisciplinaires et gérer les attentes d'une multitude d'utilisateurs tout en restant compatible avec la réactivité des ordonnanceurs d'une pluralité de solutions de calcul intensif.

### [Brève description de l'invention]

A cet effet, l'invention porte sur un procédé de gestion des flux de données accessibles au niveau d'une interface agrégée d'un client utilisateur pour une gouvernance unifiée d'une pluralité de solutions de calculs intensifs aptes à générer des données d'exécution d'opérations de calculs intensifs,
lesdites solutions de calculs intensifs comportant au moins deux solutions sélectionnées parmi : un serveur de calcul haute performance, un serveur dédié à l'apprentissage supervisé ou non supervisé, et un serveur dédié aux calculs quantiques ;
ledit procédé de gestion des flux de données étant mis en oeuvre au moins en partie par un système informatique de gestion des flux de données comportant : un microservice mandataire, un microservice de calcul pour chacune des solutions de calculs intensifs et au moins une première base de données configurée pour mémoriser des données d'exécution d'opérations de calculs intensifs ;
ledit procédé de gestion des flux de données comportant les étapes de :
   - mémorisation de données d'exécution des solutions de calculs intensifs, ladite mémorisation comportant :
      - une réception, par un premier microservice de calcul, de premières données d'exécution d'opérations de calculs intensifs générées par une première solution de calculs intensifs,
      - une mémorisation, sur l'au moins une première base de données, des premières données d'exécution d'opérations de calculs intensifs,
      - une réception, par un deuxième microservice de calcul, de deuxièmes données d'exécution d'opérations de calculs intensifs générées par une deuxième solution de calculs intensifs,
      - une mémorisation, sur l'au moins une première base de données, des deuxièmes données d'exécution d'opérations de calculs intensifs,
   - Transmission de données d'exécution des solutions de calculs intensifs, ladite transmission comportant :
      - une réception, par le microservice mandataire, d'une requête d'information sur l'exécution d'opération de calculs intensifs d'un client utilisateur,
      - une identification, sur l'au moins une première base de données, des données d'exécution d'opérations de calculs intensifs correspondant à la requête d'information, et
      - une transmission, par le microservice mandataire, des données d'exécution d'opérations de calculs intensifs identifiées au client utilisateur.

Le procédé selon l'invention est mis en oeuvre dans le cadre d'une gouvernance unifiée d'une pluralité de solutions de calculs intensifs permettant d'exposer, selon un modèle unique, des modèles et domaines d'applications de calculs intensifs ou haute performance très variés : Calcul Parallèle Haute Performance, Intelligence Artificielle, Apprentissage Profond et simulation de calcul quantique. Cette gouvernance unifiée permet une convergence générale de domaines divers cherchant à exploiter la puissance et la souplesse des grappes de calcul (clusters) ou des supercalculateurs ainsi que leur utilisation en nuage.

Les plateformes existantes pour l'accès à des solutions de calculs intensifs sont spécialisées sur une méthode de calcul particulière et les architectures logicielles concernées ne sont pas en mesure de gérer la complexité d'interaction avec plusieurs solutions de calculs intensif. Ainsi, les solutions actuelles ne sont pas capables de gérer les ordonnanceurs de plusieurs solutions de calcul intensif et des flux de traitement représentant des charges systèmes très hétérogènes sur du matériel tout autant hétérogène. De même, les architectures, à base exclusivement de microservices, proposées dans d'autres domaines de l'informatique ne sont pas applicables à une solution devant intégrer les flux de données de plusieurs solutions de calcul intensif.

En particulier, le procédé selon l'invention permet une gestion des flux de données au sein d'une gouvernance unifiée d'une pluralité de solutions de calculs intensifs. Un tel procédé permet de masquer la complexité des interactions avec les solutions de calculs intensifs et de découpler les échanges entre les clients utilisateurs et les services de calculs intensifs, en particulier leurs ordonnanceurs. Ainsi, il est possible de gérer les attentes d'une multitude d'utilisateur tout en restant compatible avec la réactivité d'un ordonnanceur de calculs intensifs.

Ainsi, le procédé selon l'invention permet un accès synchronisé et en temps réel aux données d'exécution produites par des services de calculs intensifs notamment grâce à une gestion la temporalité des requêtes entres les clients utilisateurs et les services de calculs intensifs.

De plus, outre le fait de fournir une interface agrégée permettant d'intégrer plusieurs solutions de calculs intensifs et les rendre compatibles avec les produits logiciels classiques, la présence des différentes couches d'abstraction sous forme de microservices permet une normalisation des échanges et normalisation des vues (interfaces).

**Selon d'autres caractéristiques optionnelles du procédé, ce dernier peut inclure facultativement une ou plusieurs des caractéristiques suivantes, seules ou en combinaison** :
- la réception de premières données d'exécution d'opérations de calculs intensifs correspond à la réception d'un message provenant d'une première solution de calculs intensifs.
- les premières données d'exécution d'opérations de calculs intensifs générées par une première solution de calculs intensifs ont été envoyées par un ordonnanceur de la première solution de calculs intensifs.
- les données générées par la deuxième solution de calculs intensifs ont été envoyées par un ordonnanceur de la deuxième solution de calculs intensifs.
- la mémorisation, sur l'au moins une base de données, des deuxièmes données d'exécution d'opérations de calculs intensifs comprend seulement les données d'exécution d'opérations de calculs intensifs les plus récentes.
- les solutions de calculs intensifs comportent des serveurs couplés à des ordonnanceurs configurés pour planifier une exécution d'opérations de calculs intensifs sur les serveurs, suivre l'exécution de ces opérations et transmettre les données d'exécution d'opérations de calculs intensifs générées à un microservice de calcul. L'interaction entre les microservices et les ordonnanceurs permettent de fluidifier la gouvernance et réduire les sollicitations des solutions de calcul intensif.
- la transmission de données d'exécution des solutions de calculs intensifs comporte une transmission automatisée et récurrente des données d'exécution d'opérations de calculs intensifs identifiées au client utilisateur. Ainsi le procédé permet une analyse en continu et automatisée des données d'exécution.
- l'interface agrégée est composée d'une pluralité de portlets, chaque portlet étant associé à une solution de calculs intensifs et en ce que la transmission de données d'exécution des solutions de calculs intensifs comporte une transmission des données d'exécution d'opérations de calculs intensifs d'une solution de calculs intensifs donnée au portlet lui étant associé. Cela permet de fluidifier la communication de données et masquer la complexité de l'interopérabilité des solutions de calcul intensif.
- le système informatique de gestion des flux de données comporte en outre au moins une deuxième base de données configurée pour mémoriser des données d'instruction d'opérations de calculs intensifs et en ce que ledit procédé de gestion des flux de données comporte alors des étapes de :
   - mémorisation de données d'instruction d'opérations de calculs intensifs, ladite mémorisation comportant :
   - une réception, par le microservice mandataire, d'une première requête de calcul d'un client utilisateur, ladite première requête de calcul comportant des premières données d'instruction d'opérations de calculs intensifs,
   - une mémorisation, sur l'au moins une deuxième base de données, des premières données d'instruction d'opérations de calculs intensifs,
   - une réception, par le microservice mandataire, d'une deuxième requête de calcul du client utilisateur, ladite deuxième requête de calcul comportant des deuxièmes données d'instruction d'opérations de calculs intensifs,
   - une mémorisation, sur l'au moins une deuxième base de données, des deuxièmes données d'instruction d'opérations de calculs intensifs,
- transmission de données d'instruction d'opérations de calculs intensifs, ladite transmission comportant :
   - une identification, par le microservice mandataire et sur l'au moins une deuxième base de données, de données d'instruction d'opérations de calculs intensifs non transmises,
   - une identification, par le microservice mandataire, d'une solution de calculs intensifs destinataire pour chacune des données d'instruction d'opérations de calculs intensifs non transmises, et
   - une transmission, par le microservice mandataire, des données d'instruction d'opérations de calculs intensifs non transmises au microservice de calcul de chacune des solutions de calculs intensifs destinataires.

Ainsi les instructions de calcul d'une pluralité d'utilisateurs peuvent être transmises en batch (lot) aux ordonnanceurs de chacune des solutions de calcul.
- le système informatique de gestion des flux de données comporte en outre un ordonnanceur couplé à la deuxième base de données configurée pour planifier la transmission, par le microservice mandataire, des données d'instruction d'opérations de calculs intensifs non transmises au microservice de calcul de chacune des solutions de calculs intensifs destinataires.
- les premières et deuxièmes données d'exécution d'opérations de calculs intensifs sont sélectionnées parmi :
   - des fichiers d'entrée de calculs accessibles et traitables par plusieurs solutions de calculs intensifs ;
   - des résultats de calculs accessibles et traitables par plusieurs microservices de calcul ;
   - des mesures de consommation énergétique ;
   - des mesures d'utilisation de ressources ;
   - des paramètres systèmes ;
   - des descriptions des infrastructures matérielles,
   - des données d'indice d'utilisation des processus de calculs intensifs ; et
   - des données de durée avant complétude des calculs ;
- il comporte une procédure de génération d'une donnée agrégée accessible au niveau de l'interface d'agrégation du client utilisateur, ladite procédure de génération d'une donnée agrégée comportant les étapes de :
   - réception, par le microservice mandataire, d'informations de commande d'accès d'un client utilisateur contenues dans un message provenant d'une interface agrégée,
   - détermination de données accessibles au client utilisateur, par chacun des microservices de calcul, ladite détermination étant basée au moins en partie sur les informations de commande d'accès,
   - détermination de données à agréger, par le microservice mandataire, à partir des données accessibles déterminées par chacun des microservices de calcul,
   - génération d'une donnée agrégée à partir des données à agréger, par le microservice mandataire, à partir des données accessibles déterminées par chacun des microservices de calcul, et
   - transmission de la donnée agrégée, par le microservice mandataire à l'interface d'agrégation du client utilisateur.

Ceci permet de supprimer la redondance des données entres les solutions de calcul intensif en direction d'un client utilisateur. En outre, une telle procédure permet d'avoir une ergonomie évolutive, adaptée à chaque nouvelle solution de calcul intensif. Ainsi, le procédé selon l'invention propose un point d'entrée unique vers les logiques métier (backends) différentes et cela avec une ergonomie unifiée (e.g. boutons, menus, logiques de workflows... normalisés).
- la gouvernance unifiée est assurée par un système informatique de gestion des flux de données comportant en outre un microservice de sécurité à jeton, au moins un référentiel de sécurité, et au moins un référentiel d'autorisations, ledit procédé comportant une procédure de gestion des autorisations accordées à un client utilisateur comportant les étapes de :
   - réception, par le microservice de sécurité à jeton, d'informations d'accès d'un client utilisateur,
   - authentification du client utilisateur et détermination, par le microservice de sécurité à jeton, d'au moins un attribut de rôle pour le client utilisateur à partir des informations de commande d'accès et de données mémorisées dans le référentiel de sécurité,
   - génération d'un jeton, par le microservice de sécurité à jeton, ledit jeton permettant un accès à toutes les solutions de calculs intensifs accessibles audit client utilisateur en fonction de l'au moins un attribut de rôle déterminé, et
   - détermination d'autorisations accordées au client utilisateur, par l'au moins un microservice de calcul, ladite détermination étant basée sur l'au moins un attribut de rôle déterminé et des données contenues dans l'au moins un référentiel d'autorisations.

Une telle procédure permet une authentification unique pour tous les microservices avec une gestion unique des rôles et des identités. Pour cela, une partie de la vérification de sécurité de la gouvernance unifiée dans un environnement d'exécution est avantageusement effectuée par le microservice de sécurité à jeton du système informatique de génération d'une donnée agrégée. En particulier, la sécurité est assurée via un cadre d'autorisation pouvant s'appuyer sur une gestion de rôles, une gestion des politiques d'autorisations, un mécanisme de contrôle basé sur des jetons, une délégation de la gestion des identités et une délégation des mécanismes d'authentification. Ce processus permet de coupler une authentification très flexible et générique (assurée par le microservice de sécurité) et très précise (assurée par chacun des microservices de solution de calcul intensif). En effet, le microservice de sécurité à jeton permet d'attribuer un rôle mais il n'est pas en mesure de réaliser une attribution fine d'autorisations à chacune des fonctionnalités des différentes solutions de calcul intensif. Le microservice de sécurité à jetons est alors par exemple complété par un catalogue d'autorisations spéciales dans les microservices de calcul. Ce catalogue peut être implémenté comme une table dans la base de données du backend (soit dans son propre microservice, soit dans un microservice dédié). Ainsi, le procédé selon l'invention propose une gestion d'autorisations dans le cadre d'une solution proposant un point d'entrée unique vers les logiques métier (backends) différentes et cela avec une ergonomie unifiée (e.g. boutons, menus, logiques de workflows... normalisés).
- les informations d'accès d'un client utilisateur proviennent d'un message envoyé depuis une interface agrégée du client utilisateur au microservice mandataire.
- le message provenant du client utilisateur comporte des données d'identification du client utilisateur.
- Il comprend une détermination de données redondantes, par le microservice mandataire, à partir des données accessibles déterminées par chacun des microservices de calcul.

D'autres mises en oeuvre de cet aspect comprennent des systèmes informatiques, des appareils et des programmes informatiques correspondants enregistrés sur un ou plusieurs dispositifs de stockage informatiques, chacun étant configuré pour effectuer les actions d'un procédé selon l'invention. En particulier, un système d'un ou de plusieurs ordinateurs peut être configuré pour effectuer des opérations ou des actions particulières, notamment un procédé selon l'invention, grâce à l'installation d'un logiciel, micrologiciel, matériel ou d'une combinaison de logiciels, micrologiciels ou matériel installé sur le système. En outre, un ou plusieurs programmes informatiques peuvent être configurés pour effectuer des opérations ou des actions particulières grâce à des instructions qui, lorsqu'elles sont exécutées par un appareil de traitement de données, obligent l'appareil à effectuer les actions.

Ainsi, l'invention porte en outre sur un système informatique de gestion des flux de données accessibles au niveau d'une interface agrégée d'un client utilisateur pour une gouvernance unifiée d'une pluralité de solutions de calculs intensifs accessibles aptes à générer des données d'exécution d'opérations de calculs intensifs,
lesdites solutions de calculs intensifs comportant au moins deux solutions sélectionnées parmi : un serveur de calcul haute performance, un serveur dédié à l'apprentissage supervisé ou non supervisé, et un serveur dédié aux calculs quantiques ;
ledit système informatique de gestion des flux de données comportant : un microservice mandataire, un microservice de calcul pour chacune des solutions de calculs intensifs et au moins une première base de données configurée pour mémoriser des données d'exécution d'opérations de calculs intensifs ;
ledit système informatique de gestion des flux de données étant configuré pour exécuter les étapes de :
   - mémorisation de données d'exécution des solutions de calculs intensifs, ladite mémorisation comportant :
      - une réception, par un premier microservice de calcul, de premières données d'exécution d'opérations de calculs intensifs générées par une première solution de calculs intensifs,
      - une mémorisation, sur l'au moins une première base de données, des premières données d'exécution d'opérations de calculs intensifs,
      - une réception, par un deuxième microservice de calcul, de deuxièmes données d'exécution d'opérations de calculs intensifs générées par une deuxième solution de calculs intensifs,
      - une mémorisation, sur l'au moins une première base de données, des deuxièmes données d'exécution d'opérations de calculs intensifs,
   - transmission de données d'exécution des solutions de calculs intensifs, ladite transmission comportant :
      - une réception, par le microservice mandataire, d'une requête d'information sur l'exécution d'opération de calculs intensifs d'un client utilisateur, - une identification, sur l'au moins une première base de données, des données d'exécution d'opérations de calculs intensifs correspondant à la requête d'information, et
      - une transmission, par le microservice mandataire, des données d'exécution d'opérations de calculs intensifs identifiées au client utilisateur.

Un tel système informatique permet un découplage des échanges entre le ou les clients utilisateurs et les solutions de calculs intensifs, en particulier leurs éventuels ordonnanceurs. Ainsi, il est possible de gérer les attentes d'une multitude d'utilisateur tout en restant compatible avec la réactivité des services de calculs intensifs.

D'autres avantages et caractéristiques de l'invention apparaitront à la lecture de la description suivante donnée à titre d'exemple illustratif et non limitatif, en référence aux Figures annexées :
Figure 1 représente un schéma d'un système informatique de gestion des flux de données selon l'invention.
Figure 2 représente une illustration schématique d'un procédé de gestion des flux de données selon l'invention.
Figure 3 représente une illustration schématique d'un procédé de gestion des flux de données selon un mode de réalisation de l'invention.
Figure 4 représente une illustration schématique d'une étape de mémorisation de données d'instruction d'opérations de calculs intensifs et d'une étape de transmission de données d'instruction d'opérations de calculs intensifs d'un procédé de gestion des flux de données selon l'invention.
Figure 5 représente une illustration schématique d'une procédure de gestion d'autorisations selon un mode de réalisation de l'invention.
Figure 6 représente une illustration schématique d'une procédure de génération d'une donnée agrégée selon un mode de réalisation de l'invention.
Figure 7 représente un schéma d'un système informatique de gestion des flux de données selon un mode de réalisation de l'invention.

Des aspects de la présente invention sont décrits en référence à des organigrammes et / ou à des schémas fonctionnels de procédés, d'appareils (systèmes) et de produits de programme d'ordinateur selon des modes de réalisation de l'invention.

Sur les figures, les organigrammes et les schémas fonctionnels illustrent l'architecture, la fonctionnalité et le fonctionnement d'implémentations possibles de systèmes, de procédés et de produits de programme d'ordinateur selon divers modes de réalisation de la présente invention. A cet égard, chaque bloc dans les organigrammes ou blocs-diagrammes peut représenter un système, un dispositif, un module ou un code, qui comprend une ou plusieurs instructions exécutables pour mettre en oeuvre la ou les fonctions logiques spécifiées. Dans certaines implémentations, les fonctions associées aux blocs peuvent apparaître dans un ordre différent que celui indiqué sur les figures. Par exemple, deux blocs montrés successivement peuvent, en fait, être exécutés sensiblement simultanément, ou les blocs peuvent parfois être exécutés dans l'ordre inverse, en fonction de la fonctionnalité impliquée. Chaque bloc des schémas de principe et / ou de l'organigramme, et des combinaisons de blocs dans les schémas de principe et / ou l'organigramme, peuvent être mis en oeuvre par des systèmes matériels spéciaux qui exécutent les fonctions ou actes spécifiés ou effectuer des combinaisons de matériel spécial et d'instructions informatiques.

### [Description de l'invention]

Dans la suite de la description, l'expression « **gestion des autorisation** » correspond au sens de l'invention à la capacité de gérer, en fonction de règles prédéterminées, l'accès aux solutions de calculs intensifs d'une part et les droits d'utilisateurs sur ces solutions tels que lecture, écriture, copie, exécution, modification, et contrôle total.

Le terme « **agrégée** » ou « **agrégation** » peut correspondre au fait de présenter en un seul et même emplacement des données provenant de plusieurs origines différentes. L'agrégation peut également correspondre à la création d'une nouvelle donnée à partir d'au moins deux données différentes. Par exemple, cela peut correspondre à une durée totale avant complétude d'un projet de calcul, ladite durée totale prenant en compte la durée avant complétude sur un premier serveur de calcul intensif et la durée avant complétude sur un second serveur de calcul intensif, les deux durées n'étant pas simplement additionnées.

L'expression « **interface agrégée** » ou « **interface d'agrégation** » peut désigner au sens de l'invention une interface homme-machine graphique bénéficiant d'un procédé de collecte et d'agrégation d'informations provenant des solutions de calcul intensif. En outre, une interface agrégée peut bénéficier de l'organisation des informations selon l'une des caractéristiques de l'écran affichant ladite interface.

Le terme « **Donnée(s)** » correspond à un ou plusieurs fichiers ou une ou plusieurs valeurs de paramètres. Les valeurs de paramètres étant à destination des solutions de calculs intensifs, générées par des solutions de calculs intensifs ou encore générées à partir de données des solutions de calculs intensifs. Les données au sens de l'invention peuvent en particulier correspondre à des fichiers d'entrée de calculs accessibles et traitables par plusieurs solutions de calculs intensifs, des résultats de calculs accessibles et traitables par plusieurs solutions de calculs intensifs, des données de durée avant complétude des calculs, des valeurs issues de mesures de consommation énergétique, des valeurs de mesures d'utilisation de ressources (bande passante réseau, entrées-sorties stockage, mémoire, CPU, GPU...), des informations de facturation, des valeurs de paramètres système en particulier des systèmes mettant en oeuvre les solutions de calculs intensifs ou encore des valeurs de paramètres de d'infrastructures matérielles hébergeant les solutions de calculs intensifs.

L'expression « **solution de calculs intensifs** » correspond de préférence à des infrastructures informatiques capable d'exécuter des calculs intensifs ou hautes performances tels que : Calcul Parallèle Haute Performance, Intelligence Artificielle, Apprentissage Profond, calcul quantique et simulation de calcul quantique.

Le terme « **microservice** » correspond à une chaine applicative comportant généralement une pluralité d'applications capables d'exécuter une ou plusieurs taches. Les microservices peuvent être reliés entre eux par l'intermédiaire d'API tel qu'une API REST. La présence dans le cadre de l'invention de microservices permet de conférer une forte modularité et évolutivité à la solution notamment au regard de l'implication de solutions de calculs intensifs potentiellement très différentes.

Le terme « **portlet** » peut désigner des composants logiciels d'interface utilisateur connectables qui sont gérés et affichés dans un portail web. Une page de portail peut être affichée comme une collection de fenêtres de portlet ne se chevauchant pas, où chaque fenêtre de portlet affiche un portlet. Par conséquent, un portlet (ou d'une collection de portlets) ressemble à une application basée sur le Web qui est hébergé dans un portail.

L'expression « **Portail web** » ou plus simplement « **Portail** » peut désigner un outil d'accès pour accéder à différents types d'informations et d'applications via un système client à partir des ressources du réseau. Un outil pour afficher une page de portail peut être un navigateur Web. Cependant, un portail peut également être intégré dans d'autres applications. Les portails au sens de l'invention sont avantageusement capables de présenter des données de plusieurs sources telles que des applications Web dans une seule interface agrégée Web ou d'un navigateur. En outre, un portail offre la possibilité d'afficher des portlets dans l'interface agrégée. La configuration du portail peut inclure une définition de portail avec par exemple un fichier incluant langage de balisage extensible (XML), les fichiers de définition de portlet pour tous les portlets associés avec le portail, les pages de serveur Java (JSP), les descripteurs d'applications Web, des images telles que les fichiers de format d'échange graphique ( GIFs), les descripteurs de déploiement, les fichiers de configuration, les fichiers d'archive Java (JAR) qui contiennent des instructions logiques et de mise en forme pour l'application de portail, et tous les autres fichiers nécessaires pour une application de portail souhaitée.

Le terme « **requête** » peut désigner une demande d'information, généralement identifiée par un « lien » sur une page portail. Une demande peut être initiée par un « clic » sur un symbole affiché associé au « lien ».

On entend par « **base de données** », une collection de données enregistrées sur un support accessible par ordinateur et organisées de façon à être facilement accessibles, administrées et mises à jour. Une base de données selon l'invention peut comprendre différents types de contenu sous forme de texte, d'images ou de nombres et peut ainsi correspondre à tout type de base de données connues telles que notamment une base de données relationnelle, une base de données distribuée ou encore une base de données orientée objet. La communication avec une telle base de données est assurée par un ensemble de programmes qui constituent le système de gestion de base de données fonctionnant selon un mode client/serveur, le serveur reçoit et analyse des requêtes émises par le client sous un format SQL, pour « structured language query » selon une terminologie anglo-saxonne, adapté pour communiquer avec une base de données.

L'expression « **interface homme-machine** » au sens de l'invention correspond à tout élément permettant à un être humain de communiquer avec un ordinateur en particulier et sans que cette liste soit exhaustive, un clavier et des moyens permettant en réponse aux ordres entrés au clavier d'effectuer des affichages et éventuellement de sélectionner à l'aide de la souris ou d'un pavé tactile des éléments affichés sur l'écran. Un autre exemple de réalisation est un écran tactile permettant de sélectionner directement sur l'écran les éléments touchés par le doigt ou un objet et éventuellement avec la possibilité d'afficher un clavier virtuel.

Le terme « **côté client** » peuvent désigner des activités qui peuvent être effectuées sur un client dans un environnement de réseau client - serveur. En conséquence, on peut indiquer les activités qui peuvent être exécutées le terme « du côté serveur » sur un serveur dans un environnement de réseau de serveur de client.

Le terme « **pluralité** » au sens de l'invention correspond à au moins deux. De préférence cela peut correspondre à au moins trois, de façon plus préférée au moins cinq et de façon encore plus préférée au moins dix.

On entend par « **traiter** », « **calculer** », « **exécuter** », « **déterminer** », « **afficher** », **« extraire** », « **comparer** » ou plus largement « **opération exécutable** », au sens de l'invention, une action effectuée par un dispositif ou un processeur sauf si le contexte indique autrement. À cet égard, les opérations se rapportent à des actions et / ou des processus d'un système de traitement de données, par exemple un système informatique ou un dispositif informatique électronique, qui manipule et transforme les données représentées en tant que quantités physiques (électroniques) dans les mémoires du système informatique ou d'autres dispositifs de stockage, de transmission ou d'affichage de l'information. Ces opérations peuvent se baser sur des applications ou des logiciels.

Les termes ou expressions « **application** », « **logiciel** », « **code de programme** », et « **code exécutable** » signifient toute expression, code ou notation, d'un ensemble d'instructions destinées à provoquer un traitement de données pour effectuer une fonction particulière directement ou indirectement (e.g. après une opération de conversion vers un autre code). Les exemples de code de programme peuvent inclure, sans s'y limiter, un sous-programme, une fonction, une application exécutable, un code source, un code objet, une bibliothèque et/ou tout autre séquence d'instructions conçues pour l'exécution sur un système informatique.

On entend par « **processeur** », au sens de l'invention, au moins un circuit matériel configuré pour exécuter des opérations selon des instructions contenues dans un code. Le circuit matériel peut être un circuit intégré. Des exemples d'un processeur comprennent, sans s'y limiter, une unité de traitement central, un processeur graphique, un circuit intégré spécifique à l'application (ASIC) et un circuit logique programmable.

On entend par « **couplé** », au sens de l'invention, connecté, directement ou indirectement avec un ou plusieurs éléments intermédiaires. Deux éléments peuvent être couplés mécaniquement, électriquement ou liés par un canal de communication.

Dans la suite de la description, les mêmes références sont utilisées pour désigner les mêmes éléments.

Comme cela a été mentionné, il existe de nombreuses solutions de calculs intensifs disponibles et accessibles aux utilisateurs ponctuels. Néanmoins, il n'existe pas de plateforme permettant d'unifier l'accès à une pluralité de solution de calculs intensifs de façon transparente, homogène et sécurisée.

Les inventeurs ont donc proposé un système informatique 1 de gestion des flux de données permettant, via l'utilisation d'une pluralité de microservices, d'une gouvernance unifiée et d'une interface agrégée, l'accès à une variété de services de fournisseurs tiers de solutions de calculs intensifs.

Les solutions de calculs intensifs sont généralement programmées pour organiser et planifier des opérations de calculs intensifs et pour suivre dans l'avancement de ces calculs intensif dans le temps. Une grande quantité de données que cela soit des données obtenues lors de la réalisation des calculs intensifs ou lors de la surveillance de la réalisation de ces calculs intensifs sont générées et peuvent être amenées à être échangées. Une gouvernance unifiée d'une pluralité de solutions de calculs intensifs va bénéficier de la mise en place d'une gestion des flux de données pour permettre un découplage des échanges entre le ou les clients utilisateurs et les solutions de calculs intensifs, en particulier leurs éventuels ordonnanceurs.

Pour cela, les inventeurs proposent l'utilisation d'un microservice mandataire, positionné entre une interface agrégée et des microservices de calcul et configuré pour gérer des flux de données de façon notamment à découpler les requêtes des clients utilisateur de requêtes faite aux solutions de calculs intensifs.

Ainsi, les procédés et systèmes développés par les inventeurs permettent de coupler l'accès à une information mise à jour à une centralisation des informations et une ergonomie adaptée à chaque domaine de calculs intensifs.

L'invention porte donc sur un **procédé 1000 de gestion des flux de données accessibles au niveau d'une interface agrégée 10 d'un client utilisateur 2.**

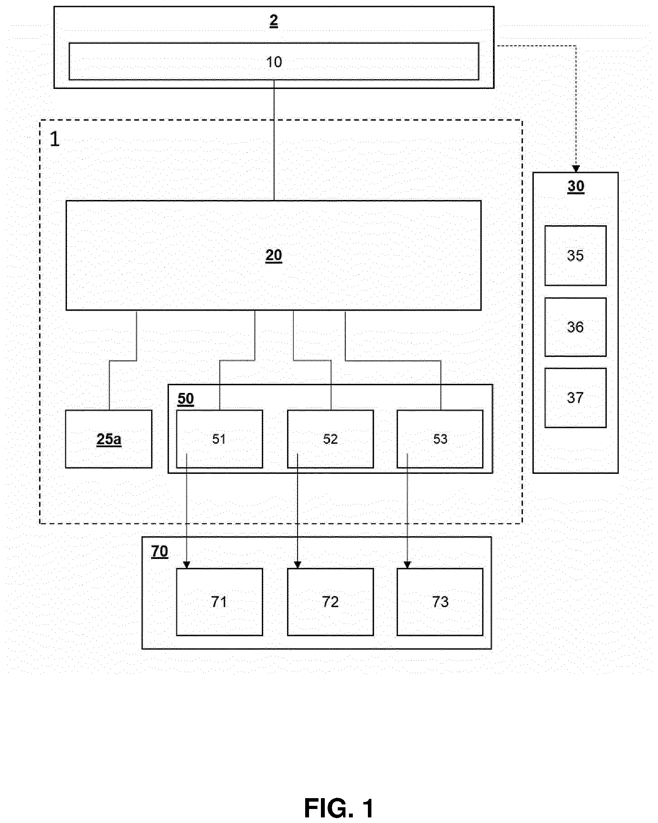

En particulier, comme cela est illustré à la **figure 1** et comme cela sera décrit par la suite, le procédé **de gestion des flux de données accessibles** et en particulier la gouvernance unifiée peuvent être assurés par un système informatique 1 de gestion des flux de données comportant : un microservice mandataire 20, au moins un microservice de calcul 50, 51, 52, 53 pour chacune des solutions de calculs intensifs et au moins une base de données 25a configurée pour mémoriser des données d'exécution d'opérations de calculs intensifs. Les microservices de calcul 50 dans le cadre de la présente invention sont par exemple sélectionnées parmi : un microservice 51 relié à un serveur de calcul haute performance 71, un microservice 52 relié à un serveur dédié à l'apprentissage supervisé ou non supervisé 72, et « n » microservice 53 relié à un serveur dédié aux calculs quantiques 73, en particulier aux simulations de calcul quantique.

La gestion des flux de données permettra grâce au procédé selon l'invention de gérer les attentes d'une multitude d'utilisateurs tout en restant compatible avec la réactivité d'un ordonnanceur de calculs intensifs.

En effet, un procédé 1000 de gestion des flux de données selon l'invention est avantageusement mis en oeuvre dans le cadre d'une gouvernance unifiée d'une pluralité de solutions de calculs intensifs 70. Les solutions de calculs intensifs 70 dans le cadre de la présente invention sont par exemple sélectionnées parmi : un serveur de calcul haute performance 71, un serveur dédié à l'apprentissage supervisé ou non supervisé 72, et un serveur dédié aux calculs quantiques 73, en particulier aux simulations de calcul quantique. En particulier, un serveur dédié à l'apprentissage supervisé ou non supervisé 72 peut être serveur dédié à l'apprentissage profond supervisé ou non supervisé. De façon préférée, les solutions de calculs intensifs pour lesquelles la gestion d'autorisations est mise en oeuvre comportent au moins deux des solutions listées ci-dessus, de façon plus préférée au moins trois des solutions listées ci-dessus.

Ainsi, le procédé de gestion des flux de données est mis en oeuvre au moins en partie par un système informatique de gestion des flux de données, c'est-à-dire que le procédé peut par exemple être mis en oeuvre par le système informatique de gestion des flux de données en combinaison avec au moins un client utilisateur, de préférence plusieurs clients utilisateur et des solutions de calcul intensif.

En outre, l'interface agrégée 10 est composée d'une pluralité de portlet 11,12,13, chaque portlet étant associé à une solution de calculs intensifs 71,72,73.

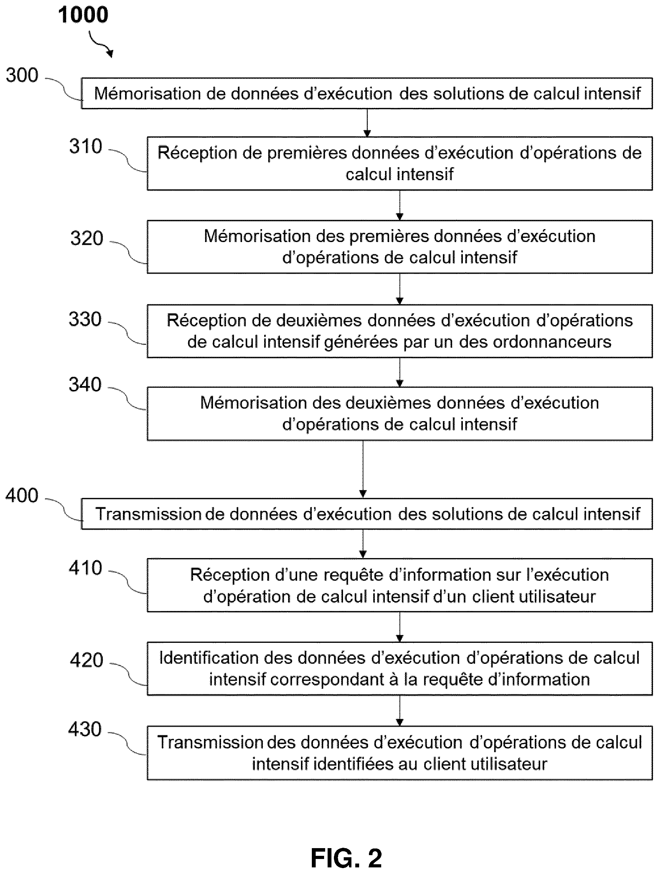

Comme cela est illustré à la **figure 2****,** un procédé 1000 de gestion des flux de données selon l'invention comporte les étapes de mémorisation 300 de données d'exécution des solutions de calculs intensifs 70 et de transmission 400 de données d'exécution des solutions de calculs intensifs.

En outre, un procédé 1000 de gestion des flux de données selon l'invention peut comporter des étapes de mémorisation 500 de données d'instruction d'opérations de calculs intensifs et de transmission 600 de données d'instruction d'opérations de calculs intensifs aux solutions de calculs intensifs.

Le procédé de gestion des flux de données selon l'invention peut également avantageusement intégrer des étapes de soumission de travaux, surveillance des travaux, suspension et reprise des travaux et modification des paramètres du travail.

De plus, comme cela sera détaillé par la suite, le procédé de gestion des flux de données selon l'invention peut avantageusement intégrer une procédure 100 de gestion d'autorisation et une procédure 200 de génération d'une donnée agrégée.

Avantageusement, un procédé 1000 de gestion des flux de données selon l'invention peut comporter une étape de modification de l'interface agrégé en fonction d'autorisations accordées au client utilisateur. En effet, une fois identifié, le client utilisateur pourra bénéficier de nouvelles fonctionnalités et donc d'une interface agrégée cohérente avec ces fonctionnalités.

Comme cela sera décrit en détail par la suite, la présente invention permet une gestion des flux de données dans le cadre d'une gouvernance unifiée d'une pluralité de solutions de calculs intensifs. Les données dont le flux sera amené à être géré sont des informations échangées avec le(s) ordonnanceur(s), ou encore des données métier générées et partagées par des solutions de calcul différentes. Les données dont le flux sera amené à être géré sont en particulier des données d'exécution des solutions de calculs intensifs 70.

Les données d'exécution des solutions de calculs intensifs 70 peuvent par exemple correspondre à :
- Des résultats de calculs accessibles et traitables par plusieurs microservices de calcul :
   Cela permet au client utilisateur 2 de disposer des résultats de calculs traités par les solutions de calculs intensifs.
- Des mesures de consommation énergétique des solutions de calculs intensifs :
   Cela permet au client utilisateur 2 de disposer d'une donnée résumant la consommation énergétique prévue, ou réelle des calculs intensifs planifiés sur une solution de calculs intensifs.
- Des mesures d'utilisation de ressources (bande passante réseau, entrées-sorties stockage, mémoire, CPU, GPU...) :
   Ainsi, au lieu de disposer de données d'utilisation des ressources en fonction des différentes solutions de calculs intensifs.
- Des données d'indice d'utilisation des processus de calculs intensifs :
   Au-delà de la mesure d'utilisation de ressources, il est avantageux de pouvoir recevoir une valeur d'indice d'utilisation des processus de calculs intensifs pour chacune des solutions de calculs intensifs utilisées. Par exemple, cette valeur d'indice peut être calculée à partir des durées d'utilisation ainsi que des capacités utilisées. Cette valeur d'indice d'utilisation des processus de calculs intensifs peut par exemple être ensuite utilisée pour calculer un cout d'utilisation de chacun des processus de calculs intensifs.
- Des données de durée avant complétude des calculs :
   Par exemple une valeur de durée reflétant la fin des opérations pour chacune des solutions de calculs intensifs.

De façon préférée, la donnée d'exécution des solutions de calculs intensifs 70 est sélectionnée parmi :
- Des résultats de calculs accessibles et traitables par plusieurs microservices de calcul ;
- Des mesures de consommation énergétique des solutions de calculs intensifs ;
- Des mesures d'utilisation de ressources ;
- Des données d'indice d'utilisation des processus de calculs intensifs ; et
- Des données de durée avant complétude des calculs.

De façon plus préférée, la donnée d'exécution des solutions de calculs intensifs 70 est sélectionnée parmi :
- Des résultats de calculs accessibles et traitables par plusieurs microservices de calcul ;
- Des mesures de consommation énergétique ; et
- Des mesures d'utilisation de ressources.

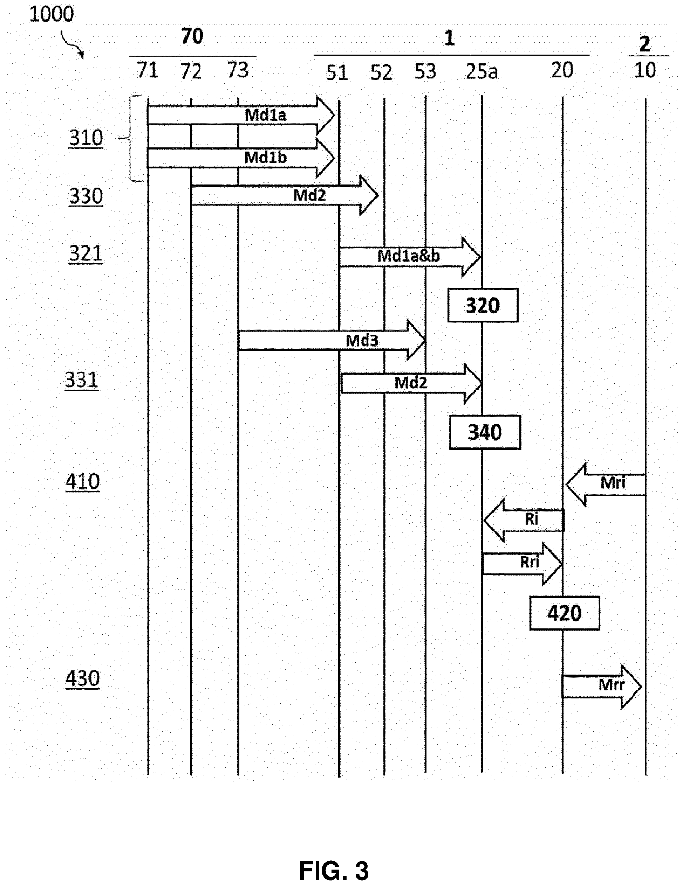

Un procédé 1000 de gestion des flux de données selon la présente invention comporte une **mémorisation 300 de données d'exécution des solutions de calculs intensifs 70.** Cette étape de mémorisation est détaillée à la figure 2 et à la **figure 3****.**

Un procédé 1000 de gestion de flux selon la présente invention comporte **une réception 310 de premières données d'exécution d'opérations de calculs intensifs.** La réception est faite par exemple par un premier microservice de calcul 51. En particulier, cette étape peut correspondre à la réception d'un message Md1a provenant d'une première solution de calculs intensifs 71. Ces données ont été générées par une première solution de calculs intensifs. En outre, elles ont été envoyées de préférence par un ordonnanceur de la première solution de calculs intensifs 71.

Comme cela est illustré à la figure 3, la réception 310 de premières données d'exécution d'opérations de calculs intensifs peut comporter la réception de plusieurs messages de données Md1a, Md1b provenant d'une première solution de calculs intensifs 71.

En outre, comme cela est illustré à la figure 3, chaque solution de calculs intensifs peut présenter une fréquence de transmission de données d'exécution d'opération de calculs intensifs qui lui est propre et différente des fréquences de transmission des autres solutions de calculs intensifs. Un des avantages de la présente invention est justement de pouvoir effacer ces différences pour l'utilisateur final.

Comme cela est illustré à la figure 3, c'est un premier microservice de calcul 51 qui recevra un ou plusieurs messages Md1a, Md1b provenant d'une première solution de calculs intensifs 71.

Un message Md1a pourra en outre comporter des données d'identification du client utilisateur 2 et/ou d'un projet de calculs intensifs. Un message Md1a, Mdlb pourra ensuite être transmis au microservice mandataire 20.

Un procédé 1000 de gestion de flux selon la présente invention comporte **une mémorisation 320 des premières données d'exécution d'opérations de calculs intensifs.** Cette mémorisation est de préférence réalisée sur l'au moins une base de données 25a.

La base de données 25a est avantageusement stockée dans une mémoire de données d'un dispositif informatique, tel qu'à titre d'exemple non limitatif un serveur informatique. La mémoire de données peut avantageusement comporter une section non effaçable, physiquement isolée ou simplement agencée pour qu'un accès en écriture ou en effacement soit proscrit. La mémoire de données peut en outre être agencée pour enregistrer les opérations de calculs intensifs réalisées par les solutions de calculs intensifs.

Comme cela est illustré à la figure 3, la mémorisation 320 des premières données d'exécution d'opérations de calculs intensifs peut correspondre à la mémorisation de données contenus dans des messages de données Md1a et Md1b comportant plusieurs données d'exécution et envoyés 321 par le premier microservices de calcul 51. Ainsi, les premières données d'exécution d'opérations de calculs intensifs Md1a&b pourront correspondre aux données de plusieurs messages Md1a, Md1b provenant d'une première solution de calculs intensifs.

Un procédé 1000 de gestion de flux selon la présente invention comporte **une réception 330** de deuxièmes données d'exécution d'opérations de calculs intensifs. Cette réception est de préférence faite par un deuxième microservice de calcul 52. Comme illustré à la figure 3, cette réception 330 peut intervenir avant la mémorisation 320 des premières données.

Ces données ont été générées par une deuxième solution de calculs intensifs. En outre, elles ont été de préférence par un ordonnanceur de la deuxième solution de calculs intensifs. Cette solution de calculs intensifs est de préférence différente de la première solution et concerne avantageusement une autre catégorie de calculs intensifs. Comme précédemment, les données d'exécution d'opérations de calculs intensifs peuvent être contenues dans un ou plusieurs messages Md2 provenant 331 de la deuxième solution de calculs intensifs.

Un procédé 1000 de gestion de flux selon la présente invention comporte **une mémorisation 340 des deuxièmes données d'exécution d'opérations de calculs intensifs.** Cette mémorisation est de préférence réalisée sur l'au moins une base de données 25a. De façon préférée, seulement les données d'exécution d'opérations de calculs intensifs les plus récentes sont mémorisées. Ainsi, il n'y a pas mémorisation de tout l'historique des données mais seulement des données d'exécution d'opérations de calculs intensifs les plus récentes.

En outre, le microservice de calcul peut ponctuellement enregistrer des informations fournies par le serveur de la solution de calculs intensifs sur une bibliothèque de journalisation et stocker ces informations dans une base de données. Alternativement, c'est le microservice mandataire 20 qui peut ponctuellement enregistrer des informations fournies par le serveur d'une solution de calculs intensifs sur une bibliothèque de journalisation et stocker ces informations dans une base de données.

Alternativement, le microservice de calcul peut interroger un serveur hébergeant la solution de calculs intensifs de façon à obtenir la dernière valeur demandée.

Avantageusement, chacun des microservices de calcul 51, 52, 53 comporte une mémoire de donnée capable de mémoriser des dernières valeurs d'une pluralité de paramètres relatif à la solution de calculs intensifs à laquelle il est lié.

Dans la figure 3, ne sont représentés que les mémorisations des premières et deuxièmes données d'exécution d'opérations de calculs intensifs néanmoins, le procédé peut comporter la réception de données provenant d'autres solutions de calcul, par exemple sous la forme de message Md3 et leur mémorisation.

Un procédé 1000 de gestion des flux de données selon la présente invention comporte également une **transmission 400 de données d'exécution des solutions de calculs intensifs.** Cette étape de transmission est détaillée à la figure 2 et à la **figure 3****.** De préférence, les fréquences de transmission de données des solutions de calcul intensifs sont différentes en fonction des solutions et sont inférieures aux fréquences de transmission du microservice mandataire aux portlet.

Un procédé 1000 de gestion de flux selon la présente invention comporte une **réception 410 d'une requête d'information sur l'exécution d'opération de calculs intensifs.** La réception est faite par exemple par le microservice mandataire 20. En particulier, cette étape peut correspondre à la réception d'un message Mri provenant d'une interface agrégée 10 d'un client utilisateur 2.

Le procédé peut alors comporter l'envoi d'un message Ri de requête d'information par le microservice mandataire 20 à la base de données 25a puis à une réception d'un message de réponse Rri comportant des données d'exécution d'opérations de calculs intensifs correspondant à la requête d'information.

Ainsi, un procédé 1000 de gestion de flux selon la présente invention comporte **une identification 420 des données d'exécution d'opérations de calculs intensifs correspondant à la requête d'information.** Cette identification peut être réalisée sur la base des informations contenue sur l'au moins une base de données 25a.

Un procédé 1000 de gestion de flux selon la présente invention comporte alors **une transmission 430 des données d'exécution d'opérations de calculs intensifs identifiées au client utilisateur 2.** La transmission est faite par exemple par le microservice mandataire 20. En particulier, cette étape peut correspondre à la transmission, à l'interface agrégée 10 d'un client utilisateur 2, d'un message Mrr provenant du microservice mandataire 20. Avantageusement, l'interface agrégée 10 est composée d'une pluralité de portlet 11,12,13, chaque portlet étant associé à une solution de calculs intensifs 71,72,73 et la transmission 400 de données d'exécution des solutions de calculs intensifs comporte une transmission des données d'exécution d'opérations de calculs intensifs d'une solution de calculs intensifs 71 donnée au portlet 11 lui étant associé.

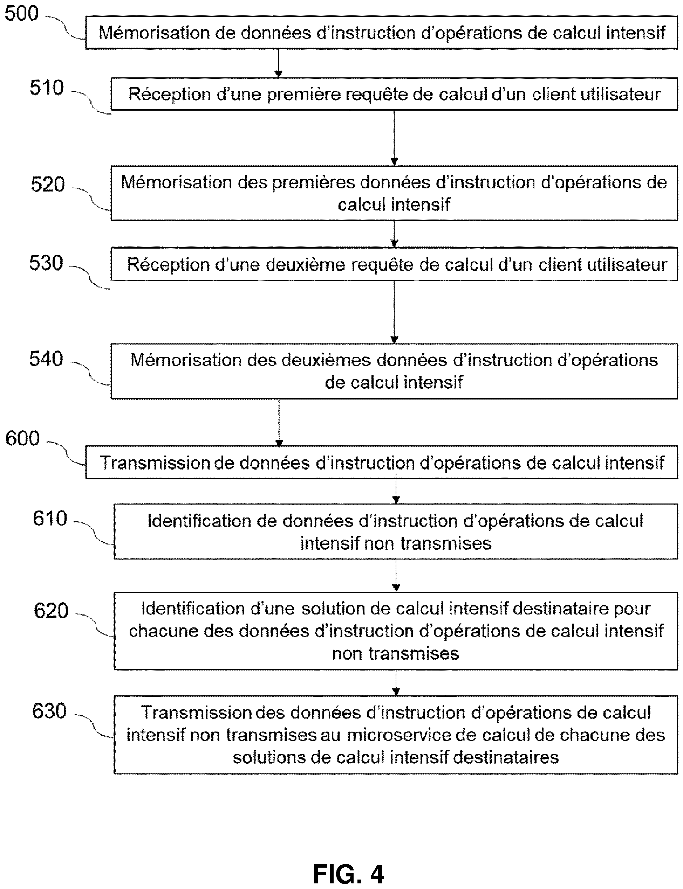

Comme cela est illustré à la **figure 4****,** un procédé 1000 de gestion des flux de données selon la présente invention peut comporter également une **mémorisation 500 de données d'instruction d'opérations de calculs intensifs** et une **transmission 600 de données d'instruction d'opérations de calculs intensifs.** Cela permet au procédé selon l'invention de mettre en oeuvre une gestion de requêtes multiple d'instructions à destination des solutions de calculs intensifs 70. En particulier, un tel mode de réalisation permet une gestion des flux de données et en particulier des requêtes lorsque ces flux proviennent de clients utilisateur multiples et concernent plusieurs solutions de calculs intensifs.

Comme illustré à la figure 4, un procédé selon l'invention peut comporter une **réception 510 d'une première requête de calcul d'un client utilisateur 2.** Cette réception est réalisée habituellement par le microservice mandataire 20. En outre, cette première requête de calcul comporte des premières données d'instruction d'opérations de calculs intensifs.

Le procédé selon l'invention peut alors comporter une **mémorisation 520 des premières données d'instruction d'opérations de calculs intensifs.** Cette mémorisation est faite en particulier sur au moins une base de données 25b.

Le procédé selon l'invention comporte une **réception 530 d'une deuxième requête de calcul du client utilisateur 2.** Comme pour la première requête de calcul, cette réception est réalisée habituellement par le microservice mandataire 20. En outre, cette deuxième requête de calcul comporte des deuxièmes données d'instruction d'opérations de calculs intensifs. Avantageusement, ces deuxièmes données d'instruction d'opérations de calculs intensifs concernent une solution de calculs intensifs 72 différente de la solution de calculs intensifs 71 concernée par les premières données d'instruction d'opérations de calculs intensifs.

Comme précédemment, **ces deuxièmes données d'instruction d'opérations de calculs intensifs peuvent être mémorisées 540** sur l'au moins une base de données 25b.

Ainsi, une **mémorisation 500 de données d'instruction d'opérations de calculs intensifs** permet de mémoriser sur au moins une base de données 25b une pluralité de données d'instruction d'opérations de calculs intensifs pouvant concernée une, de préférence plusieurs solutions de calculs intensifs différentes.

Une fois plusieurs données d'instruction d'opérations de calculs intensifs mémorisée, le procédé 1000 selon l'invention peut comporter une **identification 610 de données d'instruction d'opérations de calculs intensifs non transmises.** Cette identification peut être réalisée habituellement par le microservice mandataire 20 et en fonction des données mémorisées sur l'au moins une base de données 25b.

En outre, le procédé 1000 selon l'invention pourra comporter une **identification 620 d'une solution de calculs intensifs destinataire pour chacune des données d'instruction d'opérations de calculs intensifs non transmises.** En effet, un des avantages d'une procédure 100 selon l'invention est de pouvoir proposer une gouvernance unifiée d'une pluralité de solutions de calculs intensifs différentes. Ici, il permet par exemple grâce au microservice mandataire 20 d'identifier les solutions de calculs intensifs concernées par chacune des données d'instruction d'opérations de calculs intensifs non transmises.

En outre, le procédé 1000 selon l'invention pourra comporter une transmission 630, de préférence par le microservice mandataire 20, des données d'instruction d'opérations de calculs intensifs non transmises au microservice de calcul 51, 52, 53 de chacune des solutions de calculs intensifs destinataires.

Avantageusement, chacun des microservices de calcul 51, 52, 53, sont configurés pour communiquer avec les solutions de calculs intensifs et en particulier leurs ordonnanceurs. Ainsi, ils pourront envoyer les données d'instruction d'opérations de calculs intensifs non transmises aux solutions de calcul. Avantageusement, cet envoi pourra comporter des données d'instruction d'opérations de calculs intensifs non transmises provenant d'une pluralité de client utilisateur différents.

Ainsi il y a bien une gestion des flux de données permettant de réguler la communication avec les solutions de calculs intensifs.

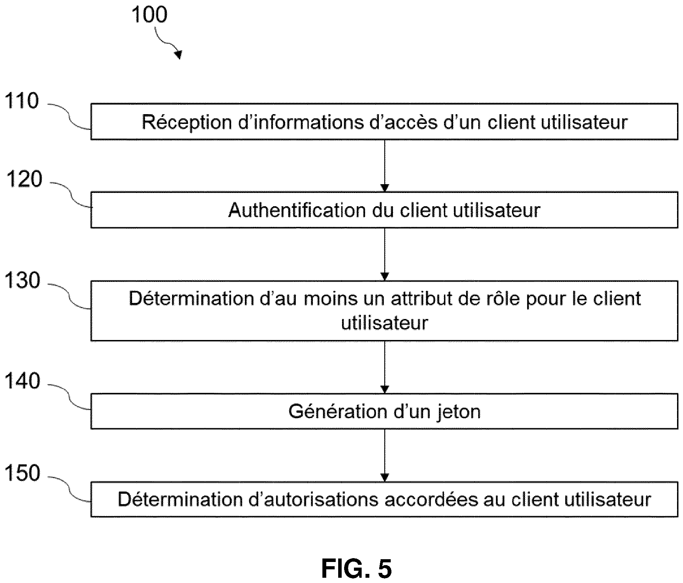

Comme cela est illustré à la figure 5, un procédé 1000 de gestion des flux de données selon l'invention peut également comporter une **procédure 100 de gestion d'autorisations accordées à un client utilisateur 2.** Dans le cadre de cette procédure 100 de gestion d'autorisation, le système informatique 1 de gestion des flux de données peut comporter en outre un microservice de sécurité à jeton 30, au moins un référentiel de sécurité 35,36,37 et au moins un référentiel d'autorisations 40.

Une telle procédure 100 de gestion d'autorisation selon l'invention comporte les étapes de réception 110 d'informations d'accès d'un client utilisateur 2, d'authentification 120 du client utilisateur 2, de détermination 130 d'au moins un attribut de rôle pour le client utilisateur 2, de génération 140 d'un jeton, et de détermination 150 de autorisations accordées au client utilisateur 2.

En outre, une procédure 100 de gestion d'autorisation selon l'invention peut comporter des étapes de soumission de travaux, surveillance de travaux, suspension et reprise de travaux et modification des paramètres du travail.

Avantageusement, une procédure 100 de gestion selon l'invention peut comporter une étape de modification de l'interface agrégée en fonction d'autorisations accordées au client utilisateur. En effet, une fois identifié, le client utilisateur pourra bénéficier de nouvelles fonctionnalités et donc d'une interface agrégée cohérente avec ces fonctionnalités.

Ainsi, la procédure 100 de gestion d'autorisation selon la présente invention comporte une **réception 110 d'informations d'accès d'un client utilisateur 2.**

De façon préférée, au moins une partie des informations d'accès sont générées au niveau de l'interface agrégée 10 du client utilisateur 2.

En particulier, la réception peut être faite par le microservice de sécurité à jeton 30. Néanmoins, de façon préférée, ces informations sont transférées du client utilisateur directement ou indirectement au microservice mandataire 20, puis le microservice mandataire 20 transfère alors ces informations d'accès modifiées, ou non, au microservice de sécurité à jeton 30.

Les informations d'accès peuvent par exemple prendre la forme d'un message comportant des données d'identification du client utilisateur 2.

Ainsi, la procédure 100 de gestion d'autorisation selon la présente invention comporte **une authentification 120 du client utilisateur 2.**

L'authentification peut par exemple être réalisée par tout module capable de mettre en oeuvre un protocole d'authentification unique (SSO pour « Single Sign On » en terminologie anglosaxonne). Différents protocoles peuvent être utilisés pour réaliser l'authentification du client utilisateur 2. De façon préférée, l'authentification 120 du client utilisateur 2 se fait selon un protocole sélectionné parmi OAuth protocole connu permettant à une application tierce d'accéder à un service web, et SAML pour « Security assertion markup language » selon une terminologie anglo-saxonne, concernant un standard informatique définissant un protocole pour échanger des informations liées à la sécurité et permettant l'authentification unique d'un utilisateur.

Avantageusement, l'authentification 120 du client utilisateur 2 n'est pas réalisée par le microservice mandataire 20. De façon plus préférée, l'authentification est réalisée par un microservice de sécurité à jeton 30. Il y a ainsi une délégation, par le microservice mandataire 20, du contrôle d'identification, d'authentification et d'attribution de rôle au microservice de sécurité à jeton 30.

En particulier, le microservice de sécurité à jetons 30 est configuré pour accéder à une pluralité d'annuaire ou référentiels de sécurité 35, 36, 37, de préférence à au moins des annuaires de type LDAP, pour « Lightweight Directory Access Protocol » selon une terminologie anglo-saxonne, un service de stockage et de gestion d'un système d'information tel que la solution connue Active Directory^{®} et un système d'authentification tel que le protocole d'authentification connu Kerberos^{®}. Le référentiel de sécurité 35,36,37 peut correspondre à un support de stockage de clés et/ou de jetons, telle qu'une base de données, un fichier de données ou tout autre système de stockage sécurisé dans une mémoire. C'est généralement un support sécurisé permettant de stocker les noms, mots de passe, rôles et autorisations des utilisateurs. De préférence, il comporte une matrice de rôle et une matrice de souscription.

En outre, le microservice de sécurité à jetons 30 met avantageusement en oeuvre un protocole de type OAuth et en particulier de type OAuth 2.0.

De façon préférée, bien que le microservice de sécurité à jeton 30 fasse partie d'un système informatique 1 de gestion des flux de données selon l'invention, il est avantageusement hébergé sur un ou plusieurs dispositifs informatiques (e.g. serveurs) différents, distincts du ou des dispositifs informatiques hébergeant le microservice mandataire 20 et/ou les microservices de calcul 50, 51, 52, 53.

Il existe de nombreuses variantes possibles dans la mise en oeuvre de l'authentification 120 du client utilisateur 2. Avantageusement, le microservice de sécurité à jeton 30 peut fournir une très grande variété de protocole d'authentification mais n'est pas en mesure de fournir des contrôles de sécurité à grains fins optimisés. Pour remédier à cette situation, les inventeurs ont proposés une délégation uniquement d'un sous ensemble de contrôle au microservice de sécurité à jeton 30. Si le microservice de sécurité à jeton 30 ne peut pas fournir des contrôles de sécurité suffisamment fins pour des solutions de calculs intensifs, ces contrôles seront confiés aux microservices de calcul.

En outre, le microservice mandataire peut enregistrer des informations fournies par le client utilisateur sur une bibliothèque de journalisation et stocker ces informations dans une base de données.

L'authentification 120 du client utilisateur 2 peut aussi correspondre à une authentification d'un client développeur. Avantageusement, le microservice de sécurité à jeton 30 sera invoqué à chaque fois qu'un tiers contactera le microservice mandataire et nécessitera une authentification.

Ainsi, la procédure 100 de gestion d'autorisation selon la présente invention comporte une **détermination 130 d'au moins un attribut de rôle pour le client utilisateur 2.**

De façon préférée, la détermination 130 est réalisée par le microservice de sécurité à jeton 30. La détermination 130 d'au moins un attribut de rôle pour le client utilisateur 2 est par exemple réalisée à partir des informations de commande d'accès et de données mémorisées dans un référentiel de sécurité 35,36,37.

Une fois le client utilisateur authentifié, le procédé selon l'invention va permettre la génération d'un jeton permettant un accès temporaire à des ressources gérées par les microservices de calcul. En particulier, le procédé selon l'invention repose sur des autorisations contrôlées via des rôles ou attributs de rôle préalablement déterminés.

Sur la base de règles prédéterminée, un rôle est sélectionné pour un client utilisateur 2 et inscrit dans un jeton d'identification du client utilisateur.

Le jeton peut par exemple prendre la forme d'un jeton JWT (« JSON Web Token » en terminologie anglosaxonne). Il contient les demandes sur l'identité du client utilisateur authentifié. Alternativement, le procédé selon l'invention peut mettre en oeuvre un jeton de type PASETO (« Platform-Agnostic Security Tokens » en terminologie anglosaxonne), un jeton de type Branca ou encore un jeton de type Macaroons (Cookies avec mises en garde contextuelles pour l'autorisation décentralisée dans le cloud selon Google^{®}).

De façon préférée, l'authentification 120 et la détermination 130 d'au moins un attribut de rôle pour le client utilisateur 2 est réalisée conformément au protocole OAuth 2.0.

En particulier, le microservice de sécurité à jeton 30 traite un message du microservice mandataire 20 et extrait la demande d'accès. Le microservice de sécurité à jeton 30 compile ensuite la liste des droits d'accès accordés pour le client utilisateur 2 et demande un jeton de sécurité pour les droits accordés.

Un jeton est alors généré et transmis au microservice mandataire 20 qui le transmet à son tour au client utilisateur.

Ainsi, la procédure 100 de gestion d'autorisation selon la présente invention comporte une **génération 140 d'un jeton.** En particulier, ce jeton généré permet un accès à toutes les solutions de calcul intensif accessibles (i.e. pour lesquelles le client utilisateur dispose des autorisations) audit client utilisateur 2 en fonction de l'au moins un attribut de rôle déterminé.

Néanmoins, ce jeton ne permet pas généralement de définir finement les autorisations accordées au client utilisateur 2 pour une ou plusieurs solutions de calcul intensif. De façon plus préférée, le jeton généré comporte des droits d'accès à une ou plusieurs solutions de calcul intensif ainsi qu'une caractéristique de rôle du client utilisateur 2.

Ainsi, la procédure 100 de gestion d'autorisation selon la présente invention comporte alors une **détermination 150 d'autorisations accordées au client utilisateur 2.**

Avantageusement, la détermination d'autorisations est basée sur l'au moins un attribut de rôle déterminé et des données contenues dans un référentiel d'autorisations 40.

La détermination d'autorisations 150 peut par exemple être réalisée par le microservice mandataire ou un microservice de calcul.

De façon préférée, la détermination 150 d'autorisations est réalisée par au moins un microservice de calcul 50, 51, 52, 53.

A titre d'exemple, une solution de calcul intensif peut présenter plus de 50 fonctionnalités qui doivent être multipliées par une distribution en fonction des rôles de l'utilisateur et des solutions. Ainsi, c'est généralement plusieurs centaines d'autorisations qui doivent être gérées. Dans le cadre de l'invention, un microservice de calcul est donc avantageusement couplé à un catalogue d'autorisations ou référentiel d'autorisations 40.

Ce catalogue ou référentiel d'autorisations 40 peut être implémenté comme une table dans la base de données du backend (soit dans son propre microservice, soit dans un microservice dédié).

Ainsi, au moins une partie du contrôle d'accès et de gestion d'autorisations est mise en oeuvre au niveau de chacun des microservices de calcul.

Grâce à cela il sera possible de répondre aux besoins d'autorisations très fines des solutions de calculs intensifs tout en assurant un haut niveau de sécurité fourni par l'utilisation de jetons d'authentification.

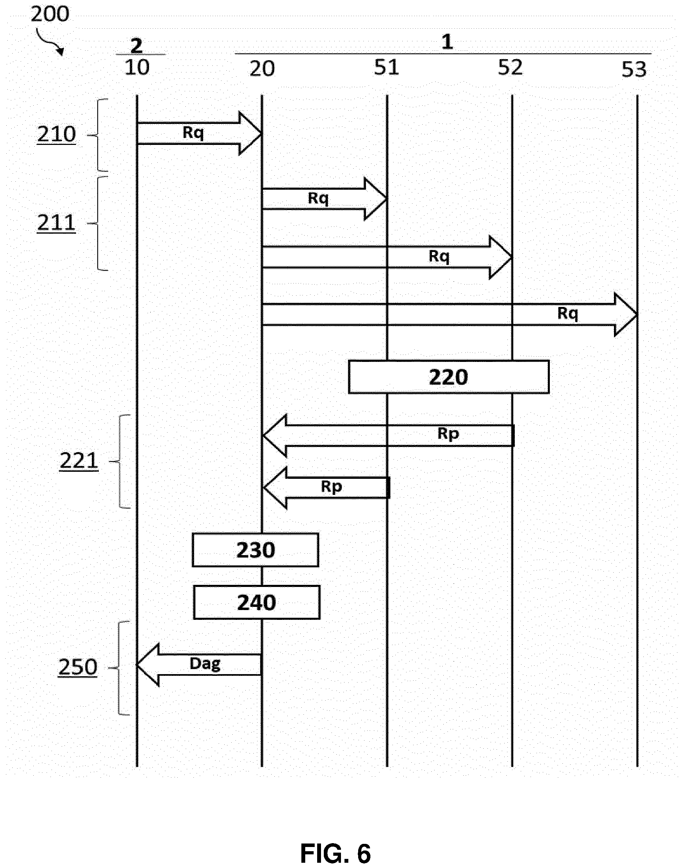

Comme cela est illustré à la figure 6, un procédé 1000 de gestion des flux de données selon l'invention peut également comporter une **procédure 200 de génération d'une donnée agrégée.**

Comme cela est illustré à la **figure 6****,** une procédure 200 de génération d'une donnée agrégée selon l'invention comporte les étapes de réception 210 d'informations de commande d'accès d'un client utilisateur, détermination 220 de données accessibles au client utilisateur 2, détermination 230 de données à agréger, génération 240 d'une donnée agrégée à partir des données à agréger et de transmission 250 de la donnée agrégée à l'interface agrégée 10 du client utilisateur 2.

En outre, une procédure 200 de génération d'une donnée agrégée selon l'invention peut comporter des étapes de détermination de données redondantes à partir des données accessibles déterminées par chacun des microservices de calcul et de transmission d'un seul exemplaire de chacune des données redondantes, par le microservice mandataire à l'interface agrégée 10 du client utilisateur 2.

Avantageusement, une procédure 200 de génération d'une donnée agrégée selon l'invention peut comporter une étape de modification de l'interface agrégé en fonction des autorisations accordées au client utilisateur. En effet, une fois identifié, le client utilisateur pourra bénéficier de nouvelles fonctionnalités et donc d'une interface agrégé cohérente avec ces fonctionnalités.

Un procédure 200 de génération d'une donnée agrégée selon la présente invention comporte une **réception 210 d'informations de commande d'accès.** En particulier, cette étape peut correspondre à la réception d'un message provenant d'une interface agrégée 10, et donc du client utilisateur 2.

Comme cela est illustré à la **figure 6****,** c'est le microservice mandataire 20 qui va recevoir un message Rq provenant du client utilisateur 2 et généré par l'intermédiaire de l'interface agrégée 10. En effet, de façon préférée, au moins une partie des informations de commande d'accès sont générées au niveau de l'interface agrégée 10 du client utilisateur 2.

Le message Rq pourra en outre comporter des données d'identification du client utilisateur 2. Ce message Rq pourra être transmis aux microservices de calcul 51, 52, 53.

Ainsi, le microservice mandataire 20 peut recevoir une requête d'une interface agrégée 10 en cours d'exécution sur un client utilisateur 2 et il peut sélectionner un ou plusieurs des microservices de calcul 51, 52, 53 à opérer sur la demande.

Le microservice mandataire 20 peut fournir la possibilité de faire 211 plusieurs demandes Rq parallèles à plusieurs cibles (i.e. microservices de calcul 51, 52, 53) et d'extraire un ensemble commun de données des sorties renvoyées par les microservices de calcul 51, 52, 53.

Les un ou plusieurs des microservices de calcul 51, 52, 53 peuvent analyser la demande et identifier une donnée dont ils disposent et pour laquelle un accès est requis.

En particulier, un procédé 200 de génération d'une donnée agrégée selon la présente invention comporte **une détermination 220 de données accessibles au client utilisateur 2.**

Une telle détermination peut être réalisée par chacun des microservices de calcul 51, 52, 53. Elle se base au moins en partie sur les informations de commande d'accès reçues par le microservice mandataire 20.

Il existe de nombreuses variantes possibles dans la mise en oeuvre de la détermination 220 de données accessibles au client utilisateur 2. Avantageusement, chacun des microservices de calcul 51, 52, 53 comporte une mémoire de données capable de mémoriser des dernières valeurs d'une pluralité de paramètres relatifs à la solution de calcul intensif à laquelle il est lié. Alternativement, le microservice de calcul peut interroger un serveur hébergeant la solution de calcul intensif de façon à obtenir la dernière valeur demandée.

En outre, un microservice de calcul 51,52,53 peut ponctuellement enregistrer des informations fournies par le serveur de la solution de calcul intensif sur une bibliothèque de journalisation et stocker ces informations dans une base de données. Alternativement, c'est le microservice mandataire 20 qui peut ponctuellement enregistrer des informations fournies par le serveur de la solution de calcul intensif sur une bibliothèque de journalisation et stocker ces informations dans une base de données.

En outre, la détermination des données accessibles pourra prendre en compte une authentification 120 du client utilisateur 2 par exemple par l'intermédiaire d'un microservice de sécurité à jeton 30, en particulier en lien avec un référentiel de sécurité 35,36,37 et au moins un référentiel d'autorisations 40 comme cela a été décrit, notamment en lien avec la figure 5.

Une donnée à agréger possiblement accessible peut par exemple être sélectionnée parmi :
- Des fichiers d'entrée de calculs accessibles et traitables par plusieurs solutions de calcul intensif :
   Cela permet au client utilisateur 2 de disposer d'une vue agrégeant les fichiers d'entrée de calcul qui sont traitables par toutes les solutions de calcul intensif et ainsi appréhender la globalité de son activité.
- Des résultats de calculs accessibles et traitables par plusieurs microservices de calcul :
   Cela permet au client utilisateur 2 de disposer d'une vue agrégeant les résultats de calculs traités par toutes les solutions de calcul intensif et ainsi appréhender la globalité des résultats accessibles de son activité.
- Des mesures de consommation énergétique des solutions de calcul intensif :
   Cela permet au client utilisateur 2 de disposer d'une donnée résumant la consommation énergétique prévue, ou réelle des calculs intensifs planifiés et ainsi appréhender la globalité de la consommation de son activité.
- Des mesures d'utilisation de ressources (bande passante réseau, entrées-sorties stockage, mémoire, CPU, GPU...) :
   Ainsi, au lieu de disposer de données éparpillées au sein des différentes solutions de calcul intensif, le client utilisateur 2 reçoit une donnée agrégée de l'utilisation des ressources associée à ses calculs intensifs.
- Des paramètres systèmes :
   Ainsi, le client utilisateur 2 reçoit une donnée agrégée des paramètres systèmes des solutions de calcul intensif utilisées.
- Des descriptions des infrastructures matérielles :
   Ainsi, le client utilisateur 2 reçoit une donnée agrégée des descriptions des infrastructures matérielles des solutions de calcul intensif utilisées.
- Des données d'indice d'utilisation des processus de calcul intensifs :
   Au-delà de la mesure d'utilisation de ressources, il est avantageux de pouvoir recevoir une valeur d'indice d'utilisation des processus de calcul intensifs agrégeant des données provenant des différentes solutions de calcul utilisées. Par exemple, cette valeur d'indice peut être calculée à partir des durées d'utilisation ainsi que des capacités utilisées. Cette valeur d'indice d'utilisation des processus de calcul intensifs peut par exemple être ensuite utilisée pour calculer un cout d'utilisation des processus de calcul intensifs et établir une facturation commune.
- Des données de durée avant complétude des calculs :
   Par exemple si une problématique est divisée entre plusieurs solutions de calcul intensif alors il est proposé un temps agrégé reflétant la fin des opérations pour chacun des serveurs et permettant d'obtenir les résultats attendus complets.

De façon préférée, la donnée agrégée est sélectionnée parmi :
- Des résultats de calculs accessibles et traitables par plusieurs microservices de calcul ;
- Des mesures de consommation énergétique des solutions de calcul intensif ;
- Des mesures d'utilisation de ressources ;
- Des données d'indice d'utilisation des processus de calcul intensifs ; et
- Des données de durée avant complétude des calculs.

De façon plus préférée, la donnée agrégée est sélectionnée parmi :
- Des résultats de calculs accessibles et traitables par plusieurs microservices de calcul ;
- Des mesures de consommation énergétique ; et
- Des mesures d'utilisation de ressources.

De façon plus préférée, la donnée agrégée correspond à des données d'indice d'utilisation des processus de calculs intensifs.

Une fois la détermination 220 de données accessibles au client utilisateur 2 réalisée, les microservices ayant identifié une donnée accessible pourront envoyer 221 la donnée au microservice mandataire 20 dans un message de réponse Rp.

Comme illustré à la figure 6, une procédure 200 de génération d'une donnée agrégée selon la présente invention comporte une **détermination 230 de données à agréger.**

De façon préférée, la détermination 230 est réalisée par le microservice mandataire 20. La détermination 230 de données à agréger est par exemple réalisée à partir des données accessibles déterminées par chacun des microservices de calcul 51,52,53.

Les microservices de calcul 51, 52, 53 peuvent être appelés avec des messages du microservice mandataire 20 parallèles et les informations contenues dans les messages de réponse Rp peuvent être agrégées (sous réserve de temporisations configurables) au fur et à mesure que les résultats reviennent au microservice mandataire 20.

En particulier, la détermination 230 de données à agréger peut mettre en oeuvre un référentiel de mots-clés 21 comportant des correspondances des catégories de données accessibles pour chacun des microservices de calcul 51,52,53.

Une procédure 200 de génération d'une donnée agrégée selon la présente invention comporte une **génération 240 d'une donnée agrégée à partir des données à agréger.** En particulier, cette donnée agrégée est une nouvelle donnée générée à partir de plusieurs données provenant chacune directement ou indirectement de solutions de calcul intensif 71,72,73 différentes et n'étant pas configurées pour fonctionner ensembles.

Cette donnée agrégée est donc inédite et permet au client utilisateur 2 d'informer sur une activité globale de calculs intensifs repartis entre plusieurs services indépendants.

Le microservice mandataire 20 peut fusionner et formater les données de sortie si nécessaire.

Une procédure 200 de génération d'une donnée agrégée Dag selon la présente invention comporte alors une **transmission 250 de ladite donnée agrégée.**

Comme cela est illustré à la figure 6, cette transmission est de préférence réalisée par le microservice mandataire 20 à destination de l'interface agrégée 10 du client utilisateur 2.

Alternativement, la donnée agrégée peut être transmise à d'autres microservices tels que par exemple :
- un serveur 80 de visualisation distante, de préférence un serveur de visualisation 3D distante, et
- un microservice 55 de gestion.

Avantageusement, la donnée agrégée est transmise à un serveur 80 de visualisation distante, et le procédure 200 selon l'invention comporte en outre une étape d'établissement d'une liaison de communication, de préférence sécurisée (e.g. chiffrement), entre le client utilisateur 2 et le serveur de visualisation 80 distante, une étape de génération de données de représentation à partir de la donnée agrégée par le serveur 80 de visualisation distant et une étape de transmission, par le serveur 80 de visualisation, des données de représentation au client utilisateur 2.

Un procédé 1000 de gestion des flux de données peut également être utilisé dans le contexte de l'invention pour gérer la **redondance des données.**

En effet, dans le cadre de la gouvernance unifiée d'une pluralité de solutions de calculs intensifs 70, une suppression de la redondance de donnée, en particulier au niveau d'une interface agrégée peut permettre de fluidifier le transfert d'informations et limiter les erreurs.

Ainsi, un procédé selon l'invention peut avantageusement comporter en outre une détermination de données redondantes. Cette étape peut être réalisée par exemple par le microservice mandataire 20 et en partir des données accessibles déterminées par chacun des microservices de calcul. En outre, il peut comporter une étape de transmission d'un seul exemplaire de chacune des données redondantes, par le microservice mandataire 20 à l'interface agrégée du client utilisateur 2.

Alternativement, les données accessibles sont transmises par le microservice mandataire 20 à l'interface agrégée du client utilisateur 2 et c'est l'interface agrégée 10 qui détermine les données redondantes.

Un procédé 1000 selon l'invention peut également comporter une **procédure de gestion de commande d'action.**

Dans le cadre de cette procédure **de gestion de commande d'action,** la gouvernance unifiée est assurée par un système informatique 1 de gestion des flux de données comportant en outre un microservice de sécurité à jeton 30, au moins un référentiel de sécurité 35,36,37 et au moins un référentiel de autorisations 40, qu'il comporte en outre les étapes suivantes :
- Réception, par le microservice mandataire 20, d'une commande d'action générée par le client utilisateur 2 et contenue dans un message provenant de l'interface agrégée ;
- Identification d'actions autorisées, par chacun des microservices de calcul 50,51,52,53, ladite identification étant basée au moins en partie sur la commande d'action et sur un référentiel d'autorisations 40 ;
- Génération d'une commande d'action transformée, par chacun des microservices de calcul 50,51,52,53 ayant identifiés une action autorisée ; et
- Transmission de la commande d'action transformée, par chacun des microservices de calcul 50,51,52,53 aux solutions de calculs intensifs 70 concernés.

Il existe des planificateurs ou ordonnanceurs permettant, au sein d'un ensemble de ressources réservées, de répartir les taches de calcul entre les moyens de calcul et de les ordonner.

Néanmoins, ces procédés et dispositifs n'interviennent qu'une fois que les moyens de calcul ont été alloués et ne permettent pas à un opérateur de rapidement identifier les noeuds à allouer.

Ainsi, le procédé selon l'invention peut également comporter une étape de planification des taches. En effet, le procédé selon l'invention s'applique à une gouvernance unifiée d'une pluralité de solution de calculs intensifs et il peut avantageusement comporter une étape au cours de laquelle des instructions reçues par le microservice mandataire 20 pourront être traitées de façon à organiser leur exécution optimale par les différentes solutions de calculs intensifs disponibles.

De façon préférée, l'étape de planification des taches comporte une mise à jour d'une file d'attente par chacun des microservices de calcul 50, 51, 52, 53. En particulier, la mise à jour de la file d'attente peut prendre en compte une valeur d'indice de priorité transmise par le client utilisateur 2.

L'étape de planification des taches peut également comporter la détermination par au moins un microservices de calcul d'une quantité de ressource d'une solution de calcul qui sera attribuée à une tache donnée.

En outre, l'étape de planification des taches pourra comporter la transmission de données de paramétrage à la solution de calculs intensifs en charge de l'exécution d'une tache donnée. Les données de paramétrages pourront par exemple correspondre à un ou plusieurs fichiers d'entrée, ou encore à un réglage spécifique à la solution de calculs intensifs.

De façon préférée, l'étape de planification des taches pourra aussi comporter lors de l'initiation d'une tache, la transmission de données de paramétrage d'environnement telles que des identifiants des répertoires de travail à utiliser, les chemins d'accès aux données ou encore les bibliothèques à utiliser.

En outre, l'étape de planification pourra comporter :
- une surveillance des taches (i.e. travaux) incluant la détermination de l'état d'avancement des travaux, l'enregistrement de journaux d'application, l'enregistrement de fichiers de résultats, la détermination de quantités de ressources utilisées, la détermination d'une valeur de crédit utilisée,
- Une clôture ou une suspension des travaux,
- Une reprise des travaux suspendus,
- Une modification des paramètres des travaux.

De façon préférée, le procédé selon l'invention peut comporter une segmentation automatisée d'une tache en une pluralité de sous-taches attribuées à plusieurs solutions de calculs intensifs différentes. Alternativement, un utilisateur peut par l'intermédiaire de l'interface agrégée définir la répartition de sous taches d'un même projet au travers de plusieurs solutions de calculs intensifs. Ces sous-taches pourront être exécutées en série ou en parallèle en fonction de leurs spécificités.

**Selon un autre aspect,** l'invention porte sur un **système** informatique **1** de gestion des flux de données accessibles **au niveau d'une interface agrégée 10** d'un client utilisateur 2 dans le cadre d'une gouvernance unifiée d'une pluralité de solutions de calculs intensifs 70.

En particulier, un système informatique 1 de gestion des flux de données selon l'invention comporte un microservice mandataire 20, au moins un microservice de calcul 50, 51, 52, 53 pour chacune des solutions de calculs intensifs et au moins une base de données 25a.

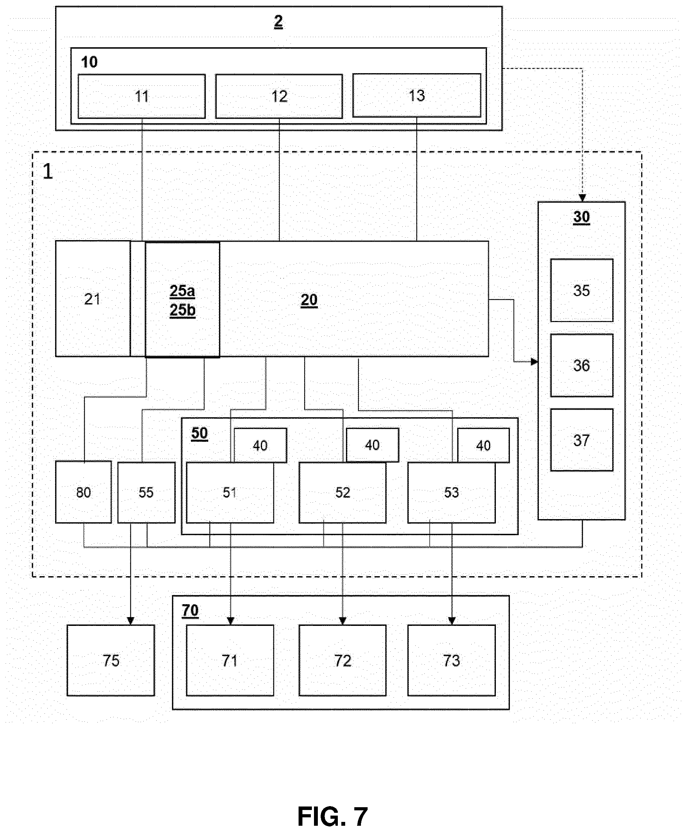

En outre, un exemple de schéma de principe d'un système informatique 1 de gestion des flux de données est présenté à la **figure 7****.** Un système informatique 1 de gestion des flux de données selon l'invention peut également comporter : un microservice de sécurité à jeton 30, au moins un référentiel de sécurité 35, 36, 37, au moins un référentiel d'autorisation 40, un référentiel de mots-clés 21 comportant des correspondances des catégories de données accessibles pour chacun des microservices de calcul 51,52,53, une base de données 25b configurée pour mémoriser des données d'instruction d'opérations de calculs intensifs et un serveur 80 de visualisation distante, de préférence un serveur de visualisation 3D distante.

Considérant l'implémentation du système informatique selon l'invention, celui-ci peut être hébergé par un ou plusieurs serveurs informatiques. Il comporte en particulier un ensemble de microservices tels que des microservices mis en oeuvre selon des protocoles de codage de type node.js ou d'autres technologies telles que Go, Java/Kotlin/Scala, PHP, Python, Pharo, Elixir, Clojure, et Haskell.

Les microservices peuvent utiliser des entités de configuration, telles que des fichiers Json ou des fichiers XML ou des représentations similaires, en tant qu'entrées pour fournir les composants de base de la logique, des transformations, du mappage et de la gestion des clés du système informatique 1.

Chacun des services ou solutions (service de sécurité à jetons, service de gestion, solutions de calculs intensifs) accessibles via le microservice mandataire 20 peut être pris en charge par un microservice correspondant ou une chaîne de microservices fournissant la logique de mise en oeuvre du service fourni. Dans le cadre du procédé selon l'invention, les microservices peuvent être exécutés individuellement et séparément dans une zone de sécurité en tant que microservice(s). En outre, comme cela a été abordé, chacune des solutions de calculs intensifs est apte à, de préférence configurée pour générer des données d'exécution d'opérations de calculs intensifs.

En particulier, un système informatique 1 de gestion des flux de données selon l'invention comporte **un microservice mandataire** 20, configuré pour recevoir une requête d'information sur l'exécution d'opération de calculs intensifs d'un client utilisateur 2. En outre, le microservice mandataire 20, est configuré pour identifier, sur l'au moins une base de données 25a, des données d'exécution d'opérations de calculs intensifs correspondant à la requête d'information puis pour transmettre des données d'exécution d'opérations de calculs intensifs identifiées au client utilisateur 2.

En outre, le microservice mandataire 20 pourra être configuré pour recevoir un message provenant d'une interface agrégée. En particulier, le message provenant de l'interface agrégée peut comporter des informations de commande d'accès d'un client utilisateur 2. Ces informations de commande d'accès pourront correspondre à des paramètres pour lesquels le client utilisateur demande une valeur ou encore à des données que souhaite recevoir le client utilisateur. Le message provenant de l'interface agrégée peut en outre comporter des données d'identifiant du client utilisateur.

Le microservice mandataire 20 peut aussi être configuré pour déterminer des données à agréger à partir des données accessibles. La détermination des données accessible est réalisée de préférence par les microservices de calculs, par exemple via la sélection de données mémorisée sur une mémoire de données accessible au microservice de calcul. La détermination des données à agréger pourra par exemple être basée sur des données mémorisées sur un mémoire de données accessible au microservice mandataire 20.

Le microservice mandataire 20 peut aussi être configuré pour générer une donnée agrégée à partir des données à agréger. Cette génération peut par exemple être basée sur des formules de calcul prédéterminées et mémorisées sur un mémoire de données accessible au microservice mandataire 20. Par exemple, en fonction des données accessibles et d'un référentiel d'agrégation comportant des formules de calcul prédéterminée, le microservice mandataire 20 générera une donnée agrégée.

Le microservice mandataire 20 peut aussi être configuré pour transmettre la donnée agrégée à l'interface agrégée 10 du client utilisateur 2.

En outre, le microservice mandataire 20 peut être configuré pour recevoir des informations d'accès d'un client utilisateur 2. Le microservice mandataire 20 peut être couplé à un complément permettant de prendre en compte des politiques d'autorisation spécifiques à chaque microservice (logique métier), cela permettant une normalisation des échanges entre le microservice mandataire 20 et le microservice de sécurité à jetons 30. En particulier, cela peut être utilisé pour synchroniser des attributs utilisateurs (potentiellement de nature très différente entre eux) en correspondance avec les rôles spécifiques aux logiques métier/microservices.

Le microservice mandataire 20 est avantageusement configuré pour acheminer les demandes entrantes vers le microservice approprié en fonction du point de terminaison (« endpoint » en terminologie anglosaxonne) spécifié, de la logique et / ou des arguments.

Le système informatique 1 de gestion des flux de données selon l'invention comporte **au moins un microservice de calcul 50, 51, 52, 53** pour chacune des solutions de calculs intensifs 70,71,72,73. Chacun des microservice de calcul 50, 51, 52, 53 peut être relié à sa solution de calculs intensifs respectif dans des canaux sécurisés telles que des connexions ssh ou mobile shell.

Chacun des microservices de calcul 50, 51, 52, 53, est configuré pour recevoir des premières données d'exécution d'opérations de calculs intensifs générées par une première solution de calculs intensifs et des deuxièmes données d'exécution d'opérations de calculs intensifs générées par une deuxième solution de calculs intensifs.

De préférence, chacun des microservices de calcul 50, 51, 52, 53, est configuré pour déterminer des autorisations accordées au client utilisateur 2.

En effet, une fois qu'un attribut de rôle a été déterminé celui-ci peut être transféré à un microservice qui pourra, sur la base de la valeur d'attribut de rôle et des données contenues dans un référentiel d'autorisations 40, déterminer des autorisations accordées au client utilisateur 2.

En particulier, les microservices de calcul 50, 51, 52, 53 couplés au microservice mandataire 20 peuvent être configurés pour pointer vers (ou être liés) respectivement à un service particulier ou à un serveur particulier. Ainsi, quand un microservices de calcul est appelé, un service de calculs intensifs correspondant est sélectionné.

Le système informatique 1 de gestion des flux de données selon l'invention comporte une **base de données 25a** configurée pour mémoriser des données d'exécution d'opérations de calculs intensifs. En particulier, l'au moins une base de données 25a sera configurée pour mémoriser des premières données d'exécution d'opérations de calculs intensifs et des deuxièmes données d'exécution d'opérations de calculs intensifs.

En outre, le système informatique 1 de gestion des flux de données selon l'invention peut comporter une **base de données 25b** configurée pour mémoriser des données d'instruction d'opérations de calculs intensifs. En particulier, l'au moins une base de données 25b sera configurée pour mémoriser des premières données d'instruction d'opérations de calculs intensifs et des deuxièmes données d'instruction d'opérations de calculs intensifs.

A l'instar de la base de données 25a, la base de données 25b est avantageusement stockée dans une mémoire de données d'un dispositif informatique, tel qu'à titre d'exemple non limitatif un serveur informatique. La mémoire de données peut avantageusement comporter une section non effaçable, physiquement isolée ou simplement agencée pour qu'un accès en écriture ou en effacement soit proscrit. La mémoire de données peut en outre être agencée pour enregistrer les données d'instruction d'opérations de calculs intensifs.

En particulier, un système informatique 1 gestion des flux de données selon l'invention comporte **un microservice de sécurité à jeton 30,** configuré pour recevoir les informations d'accès d'un client utilisateur 2, pour authentifier le client utilisateur 2 et pour déterminer au moins un attribut de rôle pour le client utilisateur 2 à partir des informations d'accès et de données mémorisées dans un référentiel de sécurité 35,36,37.

De façon préférée, le microservice de sécurité à jeton 30 est en outre configuré pour générer un jeton, ledit jeton permettant un accès à toutes les solutions de calculs intensifs accessibles audit client utilisateur 2 en fonction de l'au moins un attribut de rôle déterminé.

De façon préférée, bien que le microservice de sécurité à jeton 30 fasse partie d'un système informatique 1 de gestion des flux de données 1 selon l'invention, il est avantageusement hébergé sur un ou plusieurs dispositifs informatiques (e.g. serveurs) différents distinct du ou des dispositifs informatiques hébergeant le microservice mandataire 20 et/ou les microservices de calcul 50, 51, 52, 53.

Le microservice de sécurité à jeton 30 peut être configuré pour acheminer les demandes entrantes vers le service approprié en fonction du point de terminaison (« endpoint » en terminologie anglosaxonne) spécifié, de la logique et / ou des arguments.

En particulier, le microservice de sécurité à jeton 30 couplé au microservice mandataire 20 peut être configuré pour pointer vers (ou être lié à) un service particulier ou à un serveur particulier. Le microservice de sécurité à jetons 30 peut être configuré pour accéder à une pluralité d'annuaire, de préférence à au moins des annuaires de type LDAP 35, pour « Lightweight Directory Access Protocol » selon une terminologie anglo-saxonne, un service de stockage et de gestion d'un système d'information tel que la solution connue Active Directory^{®} 36 et un système d'authentification tel que le protocole d'authentification connu Kerberos^{®} 37.

En outre, le microservice de sécurité à jetons 30 peut avantageusement être configuré de façon à pouvoir attribuer des rôles partagés ou des rôles spécifiques, de préférence il est configuré de façon à pouvoir attribuer un rôle partagé par tous les microservices de calculs 50, 51, 52, 53.

En outre, un système informatique 1 de gestion des flux de données selon l'invention peut également comporter un **microservice 55 de gestion.** Un tel microservice de gestion pourra être connecté aux microservices de calcul 50, 51, 52, 53, au microservice mandataire et au microservice de sécurité à jetons. De plus, ce microservice de gestion pourra être configuré pour répartir les taches de calcul entre les moyens de calcul et de les ordonner. En particulier, il pourra être configuré pour organiser l'exécution optimale des taches par les différentes solutions de calculs intensifs disponibles. En outre, un tel microservice 55 de gestion pourra être relié à un service 75 dédié à l'ordonnancement.

En outre, le système informatique 1 de gestion des flux de données selon l'invention peut également comporter un **serveur 80 de visualisation distante,** de préférence un serveur de visualisation 3D distante.

Un tel serveur 80 de visualisation distante permet à des clients utilisateurs 2 de faire exécuter des applications graphiques 2D / 3D interactives sur des serveurs distants au lieu de leur système, et d'ouvrir des sessions de visualisation pour les contrôler à distance. Ainsi, l'ensemble du calcul et du rendu des applications graphiques, y compris le rendu 3D, s'effectue côté serveur sur des ressources dédiées. Les entrées clavier et souris du client utilisateur 2 sont transférées au serveur qui, en retour, code la scène graphique en pixels et renvoie les données sous forme de flux vidéo au client utilisateur 2. Le client utilisateur 2 est alors uniquement responsable du rendu du flux vidéo 2D. Un tel serveur permet de ne travailler que sur des données distantes sans avoir à les transférer sur le réseau. En effet, en règle générale, les fichiers de résultats de calcul peuvent être très volumineux (de giga-octets à téraoctets) et ne peuvent pas être transférés efficacement via Internet ou des réseaux privés d'entreprise. En outre, une telle visualisation distante associée à la gestion des autorisations selon l'invention permet d'augmenter la sécurité de la technologie.

## Revendications

1. Procédé (1000) de gestion des flux de données accessibles au niveau d'une interface agrégée (10) d'un client utilisateur (2) pour une gouvernance unifiée d'une pluralité de solutions de calculs intensifs (70) aptes à générer des données d'exécution d'opérations de calculs intensifs,
lesdites solutions de calculs intensifs (70) comportant au moins deux solutions sélectionnées parmi : un serveur de calcul haute performance (71), un serveur dédié à l'apprentissage supervisé ou non supervisé (72), et un serveur dédié aux calculs quantiques (73) ;
ledit procédé de gestion des flux de données étant mis en oeuvre au moins en partie par un système informatique (1) de gestion des flux de données comportant :
un microservice mandataire (20), un microservice de calcul (50,51,52,53) pour chacune des solutions de calculs intensifs et au moins une première base de données (25a) configurée pour mémoriser des données d'exécution d'opérations de calculs intensifs ;
ledit procédé de gestion des flux de données comportant les étapes de :
- mémorisation (300) de données d'exécution des solutions de calculs intensifs (70), ladite mémorisation comportant :
- une réception (310), par un premier microservice de calcul (51), de premières données d'exécution d'opérations de calculs intensifs générées par une première solution de calculs intensifs,
- une mémorisation (320), sur l'au moins une première base de données (25a), des premières données d'exécution d'opérations de calculs intensifs,
- une réception (330), par un deuxième microservice de calcul (52), de deuxièmes données d'exécution d'opérations de calculs intensifs générées par une deuxième solution de calculs intensifs,
- une mémorisation (340), sur l'au moins une première base de données (25a), des deuxièmes données d'exécution d'opérations de calculs intensifs,
- Transmission (400) de données d'exécution des solutions de calculs intensifs, ladite transmission comportant :
- une réception (410), par le microservice mandataire (20), d'une requête d'information sur l'exécution d'opération de calculs intensifs d'un client utilisateur (2),
- une identification (420), sur l'au moins une première base de données (25a), des données d'exécution d'opérations de calculs intensifs correspondant à la requête d'information, et
- une transmission (430), par le microservice mandataire (20), des données d'exécution d'opérations de calcul intensif identifiées au client utilisateur (2).

2. Procédé (1000) de gestion des flux de données selon la revendication 1, **caractérisée en ce que** la réception (310) de premières données d'exécution d'opérations de calculs intensifs correspond à la réception d'un message (Md1a) provenant d'une première solution de calculs intensifs (71).

3. Procédé (1000) de gestion des flux de données selon l'une des revendications 1 ou 2, **caractérisée en ce que** les premières données d'exécution d'opérations de calculs intensifs générées par une première solution de calculs intensifs ont été envoyées par un ordonnanceur de la première solution de calculs intensifs (71).

4. Procédé (1000) de gestion des flux de données selon l'une des revendications précédentes, **caractérisée en ce que** les données générées par la deuxième solution de calculs intensifs ont été envoyées par un ordonnanceur de la deuxième solution de calculs intensifs.

5. Procédé (1000) de gestion des flux de données selon l'une des revendications précédentes, **caractérisée en ce que** la mémorisation (340), sur l'au moins une base de données (25a), des deuxièmes données d'exécution d'opérations de calculs intensifs comprend seulement les données d'exécution d'opérations de calculs intensifs les plus récentes.

6. Procédé (1000) de gestion des flux de données selon l'une des revendications précédentes, **caractérisée en ce que** les solutions de calculs intensifs (70) comportent des serveurs couplés à des ordonnanceurs configurés pour planifier une exécution d'opérations de calculs intensifs sur les serveurs, suivre l'exécution de ces opérations et transmettre les données d'exécution d'opérations de calculs intensifs générées à un microservice de calcul (50,51,52,53).

7. Procédé (1000) de gestion des flux de données selon l'une des revendications précédentes, **caractérisée en ce que** la transmission (400) de données d'exécution des solutions de calculs intensifs comporte une transmission automatisée et récurrente des données d'exécution d'opérations de calculs intensifs identifiées au client utilisateur (2).

8. Procédé (1000) de gestion des flux de données selon l'une des revendication précédentes, **caractérisée en ce que** l'interface agrégée (10) est composée d'une pluralité de portlet (11,12,13), chaque portlet étant associé à une solution de calculs intensifs (71,72,73) et **en ce que** la transmission (400) de données d'exécution des solutions de calculs intensifs comporte une transmission des données d'exécution d'opérations de calculs intensifs d'une solution de calculs intensifs donnée au portlet lui étant associé.

9. Procédé (1000) de gestion des flux de données selon l'une des revendication précédentes, **caractérisé en ce que** le système informatique (1) de gestion des flux de données comporte en outre au moins une deuxième base de données (25b) configurée pour mémoriser des données d'instruction d'opérations de calculs intensifs et **en ce que** ledit procédé (1000) de gestion des flux de données comporte alors des étapes de :
- mémorisation (500) de données d'instruction d'opérations de calculs intensifs, ladite mémorisation comportant :
- une réception (510), par le microservice mandataire (20), d'une première requête de calcul d'un client utilisateur (2), ladite première requête de calcul comportant des premières données d'instruction d'opérations de calculs intensifs,
- une mémorisation (520), sur l'au moins une deuxième base de données (25b), des premières données d'instruction d'opérations de calculs intensifs,
- une réception (530), par le microservice mandataire (20), d'une deuxième requête de calcul du client utilisateur (2), ladite deuxième requête de calcul comportant des deuxièmes données d'instruction d'opérations de calculs intensifs,
- une mémorisation (540), sur l'au moins une deuxième base de données (25b), des deuxièmes données d'instruction d'opérations de calculs intensifs,
- transmission (600) de données d'instruction d'opérations de calculs intensifs, ladite transmission comportant :
- une identification (610), par le microservice mandataire (20) et sur l'au moins une deuxième base de données (25b), de données d'instruction d'opérations de calculs intensifs non transmises,
- une identification (620), par le microservice mandataire (20), d'une solution de calculs intensifs destinataire pour chacune des données d'instruction d'opérations de calculs intensifs non transmises, et
- une transmission (630), par le microservice mandataire (20), des données d'instruction d'opérations de calculs intensifs non transmises au microservice de calcul (50,51,52,53) de chacune des solutions de calculs intensifs destinataires.

10. Procédé (1000) de gestion des flux de données selon l'une des revendication précédentes, **caractérisée en ce que** le système informatique (1) de gestion des flux de données comporte en outre un ordonnanceur couplé à la deuxième base de données (25b) configurée pour planifier la transmission (630), par le microservice mandataire (20), des données d'instruction d'opérations de calculs intensifs non transmises au microservice de calcul (50,51,52,53) de chacune des solutions de calculs intensifs destinataires.

11. Procédé (100) de gestion des flux de données selon l'une des revendications précédentes, **caractérisé en ce que** les premières et deuxièmes données d'exécution d'opérations de calculs intensifs sont sélectionnées parmi :
- des fichiers d'entrée de calculs accessibles et traitables par plusieurs solutions de calculs intensifs ;
- des résultats de calculs accessibles et traitables par plusieurs microservices de calcul ;
- des mesures de consommation énergétique ;
- des mesures d'utilisation de ressources ;
- des paramètres systèmes ;
- des descriptions des infrastructures matérielles,
- des données d'indice d'utilisation des processus de calculs intensifs ; et
- des données de durée avant complétude des calculs.

12. Procédé (1000) de gestion des flux de données selon l'une des revendication précédentes, **caractérisée en ce qu'**il comporte une procédure (200) de génération d'une donnée agrégée accessible au niveau de l'interface d'agrégation (10) du client utilisateur (2), ladite procédure de génération d'une donnée agrégée comportant les étapes de :
- réception (210), par le microservice mandataire (20), d'informations de commande d'accès d'un client utilisateur (2) contenues dans un message provenant de l'interface agrégée,
- détermination (220) de données accessibles au client utilisateur (2), par chacun des microservices de calcul (50, 51, 52, 53), ladite détermination étant basée au moins en partie sur les informations de commande d'accès,
- détermination (230) de données à agréger, par le microservice mandataire (20), à partir des données accessibles déterminées par chacun des microservices de calcul (50,51,52,53),
- génération (240) d'une donnée agrégée à partir des données à agréger, par le microservice mandataire (20), à partir des données accessibles déterminées par chacun des microservices de calcul (50, 51, 52, 53), et
- transmission (250) de la donnée agrégée, par le microservice mandataire (20) à l'interface d'agrégation (10) du client utilisateur (2).

13. Procédé (1000) de gestion des flux de données selon la revendication 12, **caractérisé en ce qu'**il comprend une détermination de données redondantes, par le microservice mandataire (20), à partir des données accessibles déterminées par chacun des microservices de calcul.

14. Procédé (1000) de gestion des flux de données selon l'une des revendications précédentes, **caractérisé en ce que** la gouvernance unifiée est assurée par un système informatique (1) de gestion des flux de données comportant en outre un microservice de sécurité à jeton (30), au moins un référentiel de sécurité (35,36,37), et au moins un référentiel d'autorisations (40), ledit procédé comportant une procédure (100) de gestion des autorisations accordées à un client utilisateur comportant les étapes de :
- réception (110), par le microservice de sécurité à jeton (30), d'informations d'accès d'un client utilisateur (2),
- authentification (120) du client utilisateur (2) et détermination (130), par le microservice de sécurité à jeton (30), d'au moins un attribut de rôle pour le client utilisateur (2) à partir des informations de commande d'accès et de données mémorisées dans le référentiel de sécurité (35,36,37),
- génération (140) d'un jeton, par le microservice de sécurité à jeton (30), ledit jeton permettant un accès à toutes les solutions de calculs intensifs accessibles audit client utilisateur (2) en fonction de l'au moins un attribut de rôle déterminé, et
- détermination (150) d'autorisations accordées au client utilisateur (2), par l'au moins un microservice de calcul (50,51,52,53), ladite détermination étant basée sur l'au moins un attribut de rôle déterminé et des données contenues dans l'au moins un référentiel d'autorisations (40).

15. Système informatique (1) de gestion des flux de données accessibles au niveau d'une interface agrégée (10) d'un client utilisateur (2) pour une gouvernance unifiée d'une pluralité de solutions de calculs intensifs (70) accessibles aptes à générer des données d'exécution d'opérations de calculs intensifs,
lesdites solutions de calculs intensifs (70) comportant au moins deux solutions sélectionnées parmi : un serveur de calcul haute performance (71), un serveur dédié à l'apprentissage supervisé ou non supervisé (72), et un serveur dédié aux calculs quantiques (73) ;
ledit système informatique de gestion des flux de données comportant : un microservice mandataire (20), un microservice de calcul (50,51,52,53) pour chacune des solutions de calculs intensifs et au moins une première base de données (25a) configurée pour mémoriser des données d'exécution d'opérations de calculs intensifs ;
ledit système informatique de gestion des flux de données étant configuré pour exécuter les étapes de :
- mémorisation (300) de données d'exécution des solutions de calculs intensifs (70), ladite mémorisation comportant :
- une réception (310), par un premier microservice de calcul (51), de premières données d'exécution d'opérations de calculs intensifs générées par une première solution de calculs intensifs,
- une mémorisation (320), sur l'au moins une première base de données (25a), des premières données d'exécution d'opérations de calculs intensifs,
- une réception (330), par un deuxième microservice de calcul (52), de deuxièmes données d'exécution d'opérations de calculs intensifs générées par une deuxième solution de calculs intensifs,
- une mémorisation (340), sur l'au moins une première base de données (25a), des deuxièmes données d'exécution d'opérations de calculs intensifs,
- transmission (400) de données d'exécution des solutions de calculs intensifs, ladite transmission comportant :
- une réception (410), par le microservice mandataire (20), d'une requête d'information sur l'exécution d'opération de calculs intensifs d'un client utilisateur (2),
une identification (420), sur l'au moins une première base de données (25a), des données d'exécution d'opérations de calculs intensifs correspondant à la requête d'information, et
- une transmission (430), par le microservice mandataire (20), des données d'exécution d'opérations de calculs intensifs identifiées au client utilisateur (2).

## Patentansprüche

1. Verfahren (1000) zum Verwalten von Datenströmen, auf die an einer aggregierten Schnittstelle (10) eines Benutzer-Clients (2) zugegriffen werden kann, für eine einheitliche Regelung einer Vielzahl von rechenintensiven Lösungen (70), die geeignet sind, Daten zum Ausführen rechenintensiver Operationen zu erzeugen,
wobei die rechenintensiven Lösungen (70) mindestens zwei Lösungen aufweisen, die ausgewählt sind aus: einem Hochleistungsrechenserver (71), einem Server, der für überwachtes oder nicht überwachtes Lernen (72) dezidiert ist, und einem Server, der für Quantenberechnungen (73) dezidiert ist;
wobei das Verfahren zum Verwalten der Datenströme mindestens teilweise durch ein Computersystem (1) zum Verwalten der Datenströme umgesetzt wird, das aufweist: einen Proxy-Mikrodienst (20), einen Rechenmikrodienst (50, 51, 52, 53) für jede der rechenintensiven Lösungen und mindestens eine erste Datenbank (25a), die konfiguriert ist, um Daten zum Ausführen rechenintensiver Operationen zu speichern;
wobei das Verfahren zum Verwalten von Datenströmen die Schritte aufweist zum:
- Speichern (300) von Daten zum Ausführen rechenintensiver Lösungen (70), wobei das Speichern aufweist:
- Empfangen (310), durch einen ersten Rechenmikrodienst (51), von ersten Daten zum Ausführen rechenintensiver Operationen, die durch eine erste rechenintensive Lösung erzeugt werden,
- Speichern (320), auf der mindestens einen ersten Datenbank (25a), der ersten Daten zum Ausführen rechenintensiver Operationen,
- Empfangen (330), durch einen zweiten Rechenmikrodienst (52), von zweiten Daten zum Ausführen rechenintensiver Operationen, die durch eine zweite rechenintensive Lösung erzeugt werden,
- Speichern (340), auf der mindestens einen ersten Datenbank (25a), der zweiten Daten zum Ausführen rechenintensiver Operationen,
- Übertragen (400) von Daten zum Ausführen rechenintensiver Lösungen, wobei das Übertragen aufweist:
- Empfangen (410), durch den Proxy-Mikrodienst (20), einer Informationsanfrage über die Ausführung einer rechenintensiven Operation eines Benutzer-Clients (2),
- Identifizieren (420), auf der mindestens einen ersten Datenbank (25a), der Daten zum Ausführen rechenintensiver Operationen, die der Informationsanfrage entsprechen, und
- Übertragen (430), durch den Proxy-Mikrodienst (20), der identifizierten Daten zum Ausführen rechenintensiver Operationen an den Benutzer-Client (2).

2. Verfahren (1000) zum Verwalten von Datenströmen nach Anspruch 1, **dadurch gekennzeichnet, dass** das Empfangen (310) von ersten Daten zum Ausführen rechenintensiver Operationen dem Empfangen einer Nachricht (Md1a) entspricht, die von einer ersten rechenintensiven Lösung (71) stammt.

3. Verfahren (1000) zum Verwalten von Datenströmen nach einem der Ansprüche 1 oder 2, **dadurch gekennzeichnet, dass** die ersten Daten zum Ausführen rechenintensiver Operationen, die durch eine erste rechenintensive Lösung erzeugt werden, durch einen Scheduler der ersten rechenintensiven Lösung (71) gesendet wurden.

4. Verfahren (1000) zum Verwalten von Datenströmen nach einem der vorstehenden Ansprüche, **dadurch gekennzeichnet, dass** die durch die zweite rechenintensive Lösung erzeugten Daten durch einen Scheduler der zweiten rechenintensiven Lösung gesendet wurden.

5. Verfahren (1000) zum Verwalten von Datenströmen nach einem der vorstehenden Ansprüche, **dadurch gekennzeichnet, dass** das Speichern (340), auf der mindestens einen Datenbank (25a), der zweiten Daten zum Ausführen rechenintensiver Operationen nur die jüngsten Daten zum Ausführen rechenintensiver Operationen umfasst.

6. Verfahren (1000) zum Verwalten von Datenströmen nach einem der vorstehenden Ansprüche, **dadurch gekennzeichnet, dass** die rechenintensiven Lösungen (70) Server aufweisen, die mit Schedulern gekoppelt sind, die konfiguriert sind, um ein Ausführen rechenintensiver Operationen auf den Servern zu planen, das Ausführen dieser Operationen zu verfolgen und die erzeugten Daten zum Ausführen rechenintensiver Operationen an einen Rechenmikroservice (50, 51, 52, 53) zu übertragen.

7. Verfahren (1000) zum Verwalten von Datenströmen nach einem der vorstehenden Ansprüche, **dadurch gekennzeichnet, dass** das Übertragen (400) von Daten zum Ausführen rechenintensiver Lösungen ein automatisiertes und wiederkehrendes Übertragen von identifizierten Daten zum Ausführen rechenintensiver Operationen an den Benutzer-Client (2) aufweist.

8. Verfahren (1000) zum Verwalten von Datenströmen nach einem der vorstehenden Ansprüche, **dadurch gekennzeichnet, dass** die aggregierte Schnittstelle (10) aus einer Vielzahl von Portlets (11, 12, 13) besteht, wobei jedes Portlet einer rechenintensiven Lösung (71, 72, 73) zugeordnet ist, und **dass** das Übertragen (400) von Daten zum Ausführen rechenintensiver Lösungen ein Übertragen der Daten zum Ausführen rechenintensiver Operationen einer gegebenen rechenintensiven Lösung an das ihr zugeordnete Portlet aufweist.

9. Verfahren (1000) zum Verwalten von Datenströmen nach einem der vorstehenden Ansprüche, **dadurch gekennzeichnet, dass** das Computersystem (1) zum Verwalten von Datenströmen ferner mindestens eine zweite Datenbank (25b) aufweist, die konfiguriert ist, um Daten zum Anweisen rechenintensiver Operationen zu speichern, und **dass** das Verfahren (1000) zum Verwalten von Datenströmen dann die Schritte aufweist zum:
- Speichern (500) von Daten zum Anweisen rechenintensiver Operationen, wobei das Speichern aufweist:
- Empfangen (510), durch den Proxy-Mikrodienst (20), einer ersten Rechenanforderung von einem Benutzer-Client (2), wobei die erste Rechenanforderung erste Daten zum Anweisen rechenintensiver Operationen aufweist,
- Speichern (520), auf der mindestens einen zweiten Datenbank (25b), der ersten Daten zum Anweisen rechenintensiver Operationen,
- Empfangen (530), durch den Proxy-Mikrodienst (20), einer zweiten Rechenanforderung von dem Benutzer-Client (2), wobei die zweite Rechenanforderung zweite Daten zum Anweisen rechenintensiver Operationen aufweist,
- Speichern (540), auf der mindestens einen zweiten Datenbank (25b), der zweiten Daten zum Anweisen rechenintensiver Operationen,
- Übertragen (600) von Daten zum Anweisen rechenintensiver Operationen, wobei das Übertragen aufweist:
- Identifizieren (610), durch den Proxy-Mikrodienst (20) und auf der mindestens einen zweiten Datenbank (25b), von nicht übertragenen Daten zum Anweisen rechenintensiver Operationen,
- Identifizieren (620), durch den Proxy-Mikrodienst (20), einer rechenintensiven Empfängerlösung für jedes der nicht übertragenen Daten zum Anweisen rechenintensiver Operationen und
- Übertragen (630), durch den Proxy-Mikrodienst (20), der nicht übertragenen Daten zum Anweisen rechenintensiver Operationen an den Rechenmikrodienst (50, 51, 52, 53) jeder der rechenintensiven Empfängerlösungen.

10. Verfahren (1000) zum Verwalten von Datenströmen nach einem der vorstehenden Ansprüche, **dadurch gekennzeichnet, dass** das Computersystem (1) zum Verwalten von Datenströmen ferner einen mit der zweiten Datenbank (25b) gekoppelten Scheduler aufweist, der konfiguriert ist, um das Übertragen (630), durch den Proxy-Mikrodienst (20), der nicht an den Rechenmikrodienst (50, 51, 52, 53) übertragenen Daten zum Anweisen rechenintensiver Operationen jeder der rechenintensiven Empfängerlösungen zu planen.

11. Verfahren (100) zum Verwalten von Datenströmen nach einem der vorstehenden Ansprüche, **dadurch gekennzeichnet, dass** die ersten und die zweiten Daten zum Ausführen rechenintensiver Operationen ausgewählt sind aus:
- Recheneingabedateien, auf die durch mehrere rechenintensive Lösungen zugegriffen werden kann und die durch diese verarbeitbar sind;
- Rechenergebnisse, auf die durch mehrere Rechenmikrodienste zugegriffen werden kann und die durch diese verarbeitbar sind;
- Energieverbrauchsmessungen;
- Maßnahmen für eine Nutzung von Ressourcen;
- Systemparameter;
- Beschreibungen von Hardware-Infrastrukturen,
- Daten für einen Nutzungsindex für rechenintensive Prozesse; und - Daten zur Dauer bis zu einer Vollständigkeit der Berechnungen.

12. Verfahren (1000) zum Verwalten von Datenströmen nach einem der vorstehenden Ansprüche, **dadurch gekennzeichnet, dass** es eine Prozedur (200) zum Erzeugen einer aggregierten Dateneinheit aufweist, auf die an der aggregierten Schnittstelle (10) des Benutzer-Clients (2) zugegriffen werden kann, wobei die Prozedur zum Erzeugen einer aggregierten Dateneinheit die Schritte aufweist zum:
- Empfangen (210), durch den Proxy-Mikrodienst (20), von Informationen zum Steuern des Zugriffs eines Benutzer-Clients (2), die in einer Nachricht, die von der aggregierten Schnittstelle stammt, enthalten sind,
- Bestimmen (220) von Daten, auf die der Benutzer-Client (2) zugreifen kann, durch jeden der Rechenmikrodienste (50, 51, 52, 53), wobei das Bestimmen mindestens teilweise auf den Zugriffssteuerungsinformationen basiert,
- Bestimmen (230) von zu aggregierenden Daten, durch den Proxy-Mikrodienst (20), aus den Daten, auf die zugegriffen werden kann, die durch jeden der Berechnungsmikrodienste (50, 51, 52, 53) bestimmt werden,
- Erzeugen (240) einer aggregierten Dateneinheit aus den zu aggregierenden Daten, durch den Proxy-Mikrodienst (20), aus den Daten, auf die zugegriffen werden kann, die durch jeden der Berechnungsmikrodienste (50, 51, 52, 53) bestimmt werden, und
- Übertragen (250) der aggregierten Daten, durch den Proxy-Mikrodienst (20), an die aggregierte Schnittstelle (10) des Benutzer-Clients (2).

13. Verfahren (1000) zum Verwalten von Datenströmen nach Anspruch 12, **dadurch gekennzeichnet, dass** es ein Bestimmen redundanter Daten, durch den Proxy-Mikrodienst (20), aus den Daten, auf die zugegriffen werden kann, die durch jeden der Rechenmikrodienste bestimmt werden, aufweist.

14. Verfahren (1000) zum Verwalten von Datenströmen nach einem der vorstehenden Ansprüche, **dadurch gekennzeichnet, dass** die einheitliche Regelung durch ein Computersystem (1) zum Verwalten von Datenströmen gewährleistet wird, das ferner einen Token-Sicherheitsmikrodienst (30), mindestens ein Sicherheitsrepository (35, 36, 37) und mindestens ein Berechtigungsrepository (40) aufweist, wobei das Verfahren eine Prozedur (100) zum Verwalten der einem Benutzer-Client gewährten Berechtigungen aufweist, die die Schritte aufweist zum:
- Empfangen (110), durch den Token-Sicherheitsmikrodienst (30), von Zugriffsinformationen von einem Benutzer-Client (2),
- Authentifizieren (120) des Benutzer-Clients (2) und Bestimmen (130), durch den Token-Sicherheitsmikrodienst (30), von mindestens einem Rollenattribut für den Benutzer-Client (2) aus den Zugriffssteuerungsinformationen und den Daten, die in dem Sicherheitsrepository (35, 36, 37) gespeichert sind,
- Erzeugen (140) eines Tokens, durch den Token-Sicherheitsmikrodienst (30), wobei das Token einen Zugriff auf sämtliche der rechenintensiven Lösungen ermöglicht, auf die der Benutzer-Client (2) in Abhängigkeit von dem mindestens einen bestimmten Rollenattribut zugreifen kann, und
- Bestimmen (150) von Berechtigungen, die dem Benutzer-Client (2) gewährt werden, durch den mindestens einen Rechenmikrodienst (50, 51, 52, 53), wobei das Bestimmen auf dem mindestens einen bestimmten Rollenattribut und auf Daten basiert, die in dem mindestens einen Berechtigungsrepository (40) enthalten sind.

15. Computersystem (1) zum Verwalten von Datenströmen, auf die an einer aggregierten Schnittstelle (10) eines Benutzer-Clients (2) zugegriffen werden kann, für eine einheitliche Regelung einer Vielzahl von zugänglichen
rechenintensiven Lösungen (70), die geeignet sind, Daten zum Ausführen rechenintensiver Operationen zu erzeugen,
wobei die rechenintensiven Lösungen (70) mindestens zwei Lösungen aufweisen, die ausgewählt sind aus: einem Hochleistungsrechenserver (71), einem Server, der für überwachtes oder nicht überwachtes Lernen (72) dezidiert ist, und einem Server, der für Quantenberechnungen (73) dezidiert ist;
wobei das Computersystem zum Verwalten der Datenströme aufweist: einen Proxy-Mikrodienst (20), einen Rechenmikrodienst (50, 51, 52, 53) für jede der rechenintensiven Lösungen und mindestens eine erste Datenbank (25a), die konfiguriert ist, um Daten zum Ausführen rechenintensiver Operationen zu speichern;
wobei das Computersystem zum Verwalten von Datenströmen konfiguriert ist, um die Schritte auszuführen zum:
- Speichern (300) von Daten zum Ausführen rechenintensiver Lösungen (70), wobei das Speichern aufweist:
- Empfangen (310), durch einen ersten Rechenmikrodienst (51), von ersten Daten zum Ausführen rechenintensiver Operationen, die durch eine erste rechenintensive Lösung erzeugt werden,
- Speichern (320), auf der mindestens einen ersten Datenbank (25a), der ersten Daten zum Ausführen rechenintensiver Operationen,
- Empfangen (330), durch einen zweiten Rechenmikrodienst (52), von zweiten Daten zum Ausführen rechenintensiver Operationen, die durch eine zweite rechenintensive Lösung erzeugt werden,
- Speichern (340), auf der mindestens einen ersten Datenbank (25a), der zweiten Daten zum Ausführen rechenintensiver Operationen,
- Übertragen (400) von Daten zum Ausführen rechenintensiver Lösungen, wobei das Übertragen aufweist:
- Empfangen (410), durch den Proxy-Mikrodienst (20), einer Informationsanfrage über die Ausführung einer rechenintensiven Operation eines Benutzer-Clients (2), Identifizieren (420), auf der mindestens einen ersten Datenbank (25a), der Daten zum Ausführen rechenintensiver Operationen, die der Informationsanfrage entsprechen, und
- Übertragen (430), durch den Proxy-Mikrodienst (20), der identifizierten Daten zum Ausführen rechenintensiver Operationen an den Benutzer-Client (2).

## Claims

1. A method (1000) for managing data flows accessible at an aggregated interface (10) of a user client (2) for unified governance of a plurality of compute-intensive solutions (70) capable of generating execution data for compute-intensive operations,
said compute-intensive solutions (70) comprising at least two solutions selected from: a high-performance computing server (71), a server dedicated to supervised or unsupervised learning (72), and a server dedicated to quantum computing (73);
said data flow management method being implemented at least in part by a data flow management computer system (1) comprising: a proxy microservice (20), a computing microservice (50, 51, 52, 53) for each of the compute-intensive solutions, and at least a first database (25a) configured to store execution data from compute-intensive operations;
said data flow management method comprising the steps of:
- storing (300) execution data from compute-intensive solutions (70), said storage comprising:
- receiving (310), by a first computing microservice (51), of first execution data from compute-intensive operations generated by a first compute-intensive solution,
- storing (320), on the at least one first database (25a), of first execution data from compute-intensive operations,
- receiving (330), by a second computing microservice (52), of second execution data from compute-intensive operations generated by a second compute-intensive solution,
- storing (340), on the at least one first database (25a), of the second execution data from compute-intensive operations,
- transmitting (400) execution data from compute-intensive solutions, said transmission comprising:
- receiving (410), by the proxy microservice (20), a request for information upon the execution of a compute-intensive operation from a user client (2),
- identifying (420), on the at least one first database (25a), the execution data from compute-intensive operations corresponding to the information request, and
- transmitting (430), by the proxy microservice (20), the identified execution data from compute-intensive operations to the user client (2).

2. The method (1000) for managing data flows according to claim 1, **characterised in that** the reception (310) of first data for executing compute-intensive operations corresponds to the reception of a message (Md1a) from a first compute-intensive solution (71).

3. The method (1000) for managing data flows according to one of claims 1 or 2, **characterised in that** the first execution data from compute-intensive operations generated by a first compute-intensive solution have been sent by a scheduler of the first compute-intensive solution (71).

4. The method (1000) for managing data flows according to one of the preceding claims, **characterised in that** the data generated by the second compute-intensive solution have been sent by a scheduler of the second compute-intensive solution.

5. The method (1000) for managing data flows according to one of the preceding claims, **characterised in that** the storage (340), on the at least one database (25a), of second execution data from compute-intensive operations comprises only the most recent execution data from compute-intensive operations.

6. The method (1000) for managing data flows according to one of the preceding claims, **characterised in that** the compute-intensive solutions (70) comprise servers coupled to schedulers configured to plan the execution of compute-intensive operations on the servers, monitor the execution of these operations and to transmit the execution data generated from compute-intensive operations to a computing microservice (50, 51, 52, 53).

7. The method (1000) for managing data flows according to one of the preceding claims, **characterised in that** the transmission (400) of execution data from compute-intensive solutions comprises an automated and recurrent transmission of execution data from identified compute-intensive operations to the user client (2).

8. The method (1000) for managing data flows according to one of the preceding claims, **characterised in that** the aggregated interface (10) is made up of a plurality of portlets (11, 12, 13), each portlet being associated with a compute-intensive solution (71, 72, 73), and **in that** the transmission (400) of execution data from compute-intensive solutions comprises a transmission of execution data from compute-intensive operations from a given compute-intensive solution to the portlet associated therewith.

9. The method (1000) for managing data flows according to one of the preceding claims, **characterised in that** the computer system (1) for managing data flows further comprises at least one second database (25b) configured to store instruction data for compute-intensive operations, and **in that** said method (1000) for managing data flows then comprises steps of:
- storing (500) instruction data for compute-intensive operations, said storage comprising:
- receiving (510), by the proxy microservice (20), a first computation request from a user client (2), said first computation request comprising first instruction data for compute-intensive operations,
- storing (520), on the at least one second database (25b), first instruction data for compute-intensive operations,
- receiving (530), by the proxy microservice (20), a second computation request from the user client (2), said second computation request comprising second instruction data for compute-intensive operations,
- storing (540), on the at least one second database (25b), second instruction data for compute-intensive operations,
- transmitting (600) instruction data for compute-intensive operations, said transmission comprising:
- identifying (610), by the proxy microservice (20) and on the at least one second database (25b), instruction data for untransmitted compute-intensive operations,
- identifying (620), by the proxy microservice (20), of a destination compute-intensive solution for each of the untransmitted compute-intensive operation instruction data, and
- transmitting (630), by the proxy microservice (20), instruction data for untransmitted compute-intensive operations to the computing microservice (50, 51, 52, 53) of each of the destination compute-intensive solutions.

10. The method (1000) for managing data flows according to one of the preceding claims, **characterised in that** the data flow management computer system (1) further comprises a scheduler coupled to the second database (25b) configured to plan the transmission (630), by the proxy microservice (20), of instruction data for compute-intensive operations not transmitted to the computing microservice (50, 51, 52, 53) of each of the destination compute-intensive solutions.

11. The method (100) for managing data flows according to one of the preceding claims, **characterised in that** the first and second execution data from compute-intensive operations are selected from:
- calculation input files that can be accessed and processed by several compute-intensive solutions;
- calculation results that can be accessed and processed by several computing microservices;
- energy consumption measurements;
- resource utilisation measurements;
- system parameters;
- descriptions of hardware infrastructures,
- compute-intensive process utilisation index data; and
- time-to-completion data.

12. The method (1000) for managing data flows according to one of the preceding claims, **characterised in that** it comprises a procedure (200) for generating aggregated data accessible at the aggregation interface (10) of the user client (2), said procedure for generating aggregated data comprising the steps of:
- receiving (210), by the proxy microservice (20), access control information from a user client (2) contained in a message from the aggregated interface,
- determining (220) data accessible to the user client (2), by each of the computing microservices (50, 51, 52, 53), said determination being based at least in part on the access control information,
- determining (230) data to be aggregated, by the proxy microservice (20), from the accessible data determined by each of the computing microservices (50, 51, 52, 53),
- generating (240) aggregated data from the data to be aggregated, by the proxy microservice (20), from the accessible data determined by each of the computing microservices (50, 51, 52, 53), and
- transmitting (250) the aggregated data by the proxy microservice (20) to the aggregation interface (10) of the user client (2).

13. The method (1000) for managing data flows according to claim 12, **characterised in that** it comprises a determination of redundant data, by the proxy microservice (20), from the accessible data determined by each of the computing microservices.

14. The method (1000) for managing data flows according to one of the preceding claims, **characterised in that** unified governance is provided by a data flow management computer system (1) further comprising a token-based security microservice (30), at least one security repository (35, 36, 37), and at least one authorisation repository (40), said method comprising a procedure (100) for managing the authorisations granted to a user client comprising the steps of:
- receiving (110), by the token-based security microservice (30), access information from a user client (2),
- authenticating (120) the user client (2) and determining (130), by the token-based security microservice (30), at least one role attribute for the user client (2) from the access control information and data stored in the security repository (35, 36, 37),
- generating (140) a token, by the token-based security microservice (30), said token allowing access to all the compute-intensive solutions accessible to said user-client (2) as a function of the at least one determined role attribute, and
- determining (150) authorisations granted to the user client (2), by the at least one computing microservice (50, 51, 52, 53), said determination being based on the at least one determined role attribute and data contained in the at least one authorisation repository (40).

15. A computer system (1) for managing data flows accessible at an aggregated interface (10) of a user client (2) for unified governance of a plurality of accessible compute-intensive solutions (70) capable of generating execution data from compute-intensive operations,
said compute-intensive solutions (70) comprising at least two solutions selected from: a high-performance computing server (71), a server dedicated to supervised or unsupervised learning (72), and a server dedicated to quantum computing (73); said data flow management computer system comprising: a proxy microservice (20), a computing microservice (50, 51, 52, 53) for each of the compute-intensive solutions and at least one first database (25a) configured to store execution data from compute-intensive operations;
said data flow management computer system being configured to execute the steps of:
- storing (300) execution data from compute-intensive solutions (70), said storage comprising:
- receiving (310), by a first computing microservice (51), of first execution data from compute-intensive operations generated by a first compute-intensive solution,
- storing (320), on the at least one first database (25a), of first execution data from compute-intensive operations,
- receiving (330), by a second computing microservice (52), of second execution data from compute-intensive operations generated by a second compute-intensive solution,
- storing (340), on the at least one first database (25a), of the second execution data from compute-intensive operations,
- transmitting (400) execution data from compute-intensive solutions, said transmission comprising:
- receiving (410), by the proxy microservice (20), a request for information upon the execution of a compute-intensive operation from a user client (2),
identifying (420), on the at least one first database (25a), the execution data from compute-intensive operations corresponding to the information request, and
- transmitting (430), by the proxy microservice (20), of identified execution data from compute-intensive operations to the user client (2).
